Europäisches Patentamt

European Patent Office

Office européen des brevets

(19)

(11) **EP 1 555 511 A1**

(12) **EUROPEAN PATENT APPLICATION**
published in accordance with Art. 158(3) EPC

(43) Date of publication:
20.07.2005 Bulletin 2005/29

(51) Int Cl.$^7$: **G01C 21/00**, G08G 1/137

(21) Application number: 03758774.8

(86) International application number:
**PCT/JP2003/013483**

(22) Date of filing: 22.10.2003

(87) International publication number:
**WO 2004/038335 (06.05.2004 Gazette 2004/19)**

(84) Designated Contracting States:
**AT BE BG CH CY CZ DE DK EE ES FI FR GB GR
HU IE IT LI LU MC NL PT RO SE SI SK TR**

(30) Priority: 22.10.2002 JP 2002307547
28.04.2003 JP 2003123127
20.06.2003 JP 2003175866
16.10.2003 JP 2003355778

(71) Applicant: **Hitachi, Ltd.
Tokyo 100-8280 (JP)**

(72) Inventors:
• **Kawamata, Yukihiro,
Hitachi Research Laboratory
Hitachi-shi, Ilbaraki 319-1292 (JP)**
• **Okude, Mariko, Hitachi Research Laboratory
Hitachi-shi, Ibaraki 319-1292 (JP)**
• **Kato, Manabu, Hitachi Research Laboratory
Hitachi-shi, Ibaraki 319-1292 (JP)**

• **Atarashi, Yoshitaka,
Hitachi Research Laboratory
Hitachi-shi, Ibaraki 319-1292 (JP)**
• **Matsuo, Shigeru, Hitachi Research Laboratory
Hitachi-shi, Ibaraki 319-1292 (JP)**
• **Nakahara, Takashi, Hitachi Research Laboratory
Hitachi-shi, Ibaraki 319-1292 (JP)**
• **Tanizaki, Masaaki, Central Research Laboratory
Kokubunji-shi, Tokyo 185-8601 (JP)**
• **Maruyama, Kishiko,
Central Research Laboratory
Kokubunji-shi,, Tokyo 185-8601 (JP)**
• **Shimada, Shigeru, Central Research Laboratory
Kokubunji-shi, Tokyo 185-8601 (JP)**

(74) Representative: **Beetz & Partner Patentanwälte
Steinsdorfstrasse 10
80538 München (DE)**

(54) **MAP DATA DELIVERING METHOD FOR COMMUNICATION-TYPE NAVIGATION SYSTEM**

(57)     In a communication type navigation system that downloads maps, the present invention provides a map data transmission method that can reduce time before guiding is started. A map provision server searches for a traveling route connecting a starting place corresponding to current position information received from an on-vehicle terminal and a destination corresponding to destination information. The server generates guidance information for guiding the vehicle along the searched traveling route and generates a route vicinity map along the traveling route. The server generates traveling route information comprising the searched traveling route and the guidance information, and plural map information blocks into which the route vicinity map containing map information is divided along the traveling route, assigns transmission priority levels to the map information blocks, and transmits the map information blocks according to the transmission priority levels after transmitting the traveling route information.

FIG. 2

## Description

TECHNICAL FIELD

The present invention relates to a map data transmitting method in a navigation system, and an on-vehicle terminal that receives map over communication.

BACKGROUND OF THE INVENTION

A communication type navigation system has been developed and attracted a great deal of attentions. In this system, through data communication between a navigation device installed in a vehicle and a server device over a mobile phone network, various useful information including map data is transmitted to the navigation device in the vehicle.

As a car navigation system that downloads map data from a server through communication lines, for example, disclosures in Japanese Patent Laid-Open No. 2001-50765 and Japanese Patent Laid-Open No. H11(1999)-237251 have been known. The method of acquiring map data by downloading from a server is advantageous to users because the latest map data stored in the server can be used.

Recently, a map information transmission system that can efficiently transmit partial map information has been proposed (e.g., Japanese Patent Laid-Open No. 2002-48573). This map information transmission system receives starting information and destination information from on-vehicle terminals, searches for a route connecting a starting place corresponding to the starting information and a destination corresponding to the destination information, decides map information corresponding to the route, and transmits the map information to the on-vehicle terminals, whereby the on-vehicle terminals can obtain necessary information without having maps in advance.

For the transmission of map information, as described in Japanese Patent Laid-Open No. 2002-107151, a map database 145 of a map information providing system stores map data classified by layer, category, and the like representative of map types. Upon receiving a map information transmission request from a mobile phone terminal 90, the map information providing system searches the map data according to layer, category, and the like, and transmits user-requested map information without modifications.

For the transmission of guidance information, a system is proposed which initially transmits only the data of a traveling route of a predetermined distance from a current position, then successively transmits divided traveling routes (e.g., the international patent (laid-open) No. 00/66975, and Japanese Patent Laid-Open No. 2000-28371). In this case, a next traveling transmission point is set on a traveling route already transmitted. And when the transmission point is reached, a traveling route of a next predetermined distance is transmitted, and traveling route information is downloaded according to route guidance of up to a destination. According to this method, first, since only a traveling route of a predetermined distance is downloaded, communication time becomes shorter and waiting time until operation is started becomes shorter than when data of the entire traveling route is downloaded.

Furthermore, as to a car navigation system that downloads map data from a server through communication lines, as a method of dividing a map into meshes (rectangles) to manage it and transferring meshes of a traveling route portion to an on-vehicle machine for reuse, a technology described in Japanese Patent Laid-Open No. 2002-48573 has been known.

As another method, as described in Japanese Patent Laid-Open No. 2001-84493, a method of cutting out a map of a route and the vicinity in an arbitrary shape by a server and transferring it to an on-vehicle machine has been known.

However, since such a communication type navigation device is a car navigation device that downloads maps without using CD-ROM and DVD-ROM in which map data is stored, to display a route on a map for route guidance, map data for displaying the route must be downloaded. The communication type navigation device does not start navigation before downloading all map data necessary for displaying the route.

However, a problem in the downloading of map data from a server is the amount of the map data. Specifically, an increase in the amount of the map data exerts influences on download time of the map data and the processing capacity of a car navigation system. The influences increase response time of the car navigation system, and impair user's convenience. As a result, under the present circumstances, long waiting time occurs before guiding is started. Particularly, upon a request to transmit map information from a user, transmitting the map information with it left intact prolongs transmission time when the data amount of the map information to be transmitted is large.

On the other hand, the map data downloaded from the server must contain information needed when the user drives. For example, the data of branch points or intersections on a route on which the user is traveling is data necessary for the user to travel correctly on the route. Therefore, reducing information needed when the user drives would reduce the amount of the map data but impair the proper convenience of the car navigation system of guiding the user along the route.

An object of the present invention is to provide a navigation system of map download type that has the convenience of guiding along a route and effectively reduces the amount of map data to transmit maps, a method of transmitting map data so as to reduce time before guiding is started, and an on-vehicle terminal for receiving maps.

DISCLOSURE OF THE INVENTION

A map provision server searches for a traveling route connecting a starting place corresponding to current position information received from an on-vehicle terminal and a destination corresponding to destination information received from the on-vehicle terminal, and generates guidance information on the searched traveling route. Moreover, the server creates traveling route information comprising the traveling route and the guidance information, and map information on the traveling route along the traveling route. The guidance information and the map information are divided into plural segments before being transmitted as map information blocks. The plural map information blocks are assigned transmission priority levels and transmitted according to the transmission priority levels after the traveling route information is transmitted.

Upon receiving the traveling route information, the on-vehicle terminal starts navigation by displaying on the screen or guiding by voice a guidance direction of a next guidance point, a road name relating to a next guidance point, or an intersection name relating to a next guidance point, a point name relating to a next guidance point, a distance to a next guidance point, or a distance to a destination.

The map provision server divides the map information into road information and background information, and transmits earlier the road information. The on-vehicle terminal receives earlier the road information and starts guidance, and upon receiving the road information, displays a road map. Upon receiving background information, it superimposes the background information on the road map to display a complete map.

To continue guidance for vehicle using data already received even when some portions of the information have been unsuccessfully received, the on-vehicle terminal determines whether map data blocks of the vehicle position and the vicinity have been received, and traveling route information including guidance information has been received. As a result, when the traveling route information including guidance information has been received, and the map data blocks of the vehicle position and the vicinity have not been received, the on-vehicle terminal turns on the mode of performing guidance by using only the traveling route information including the received guidance information. When the traveling route information including guidance information has been received, and the map data blocks of the vehicle position and the vicinity have been received, turns on the mode of performing guidance while displaying map data of the vehicle position and the vicinity.

BRIEF DESCRIPTION OF THE DRAWINGS

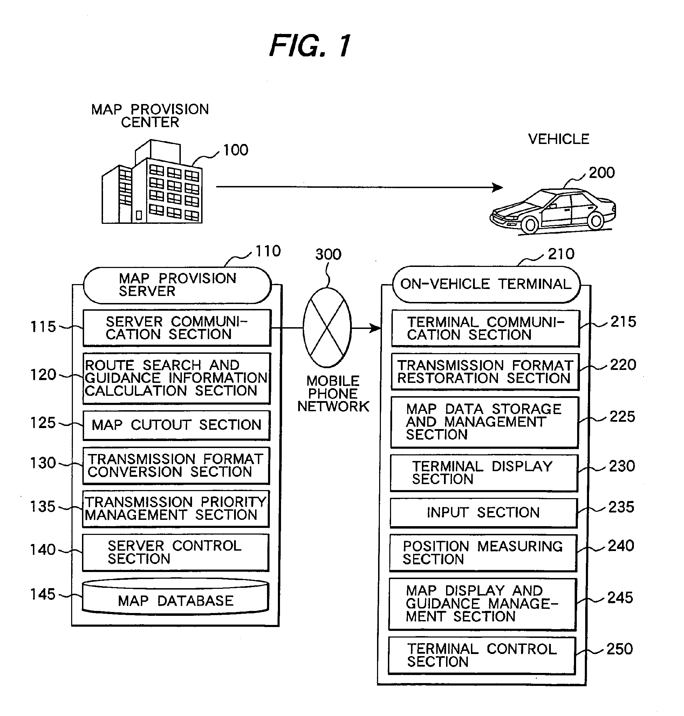

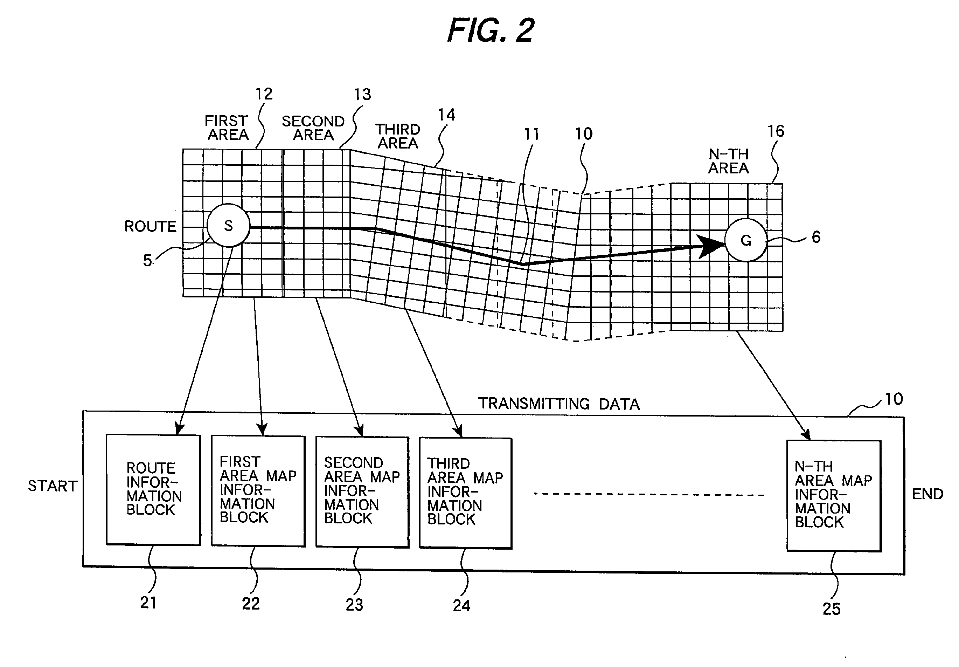

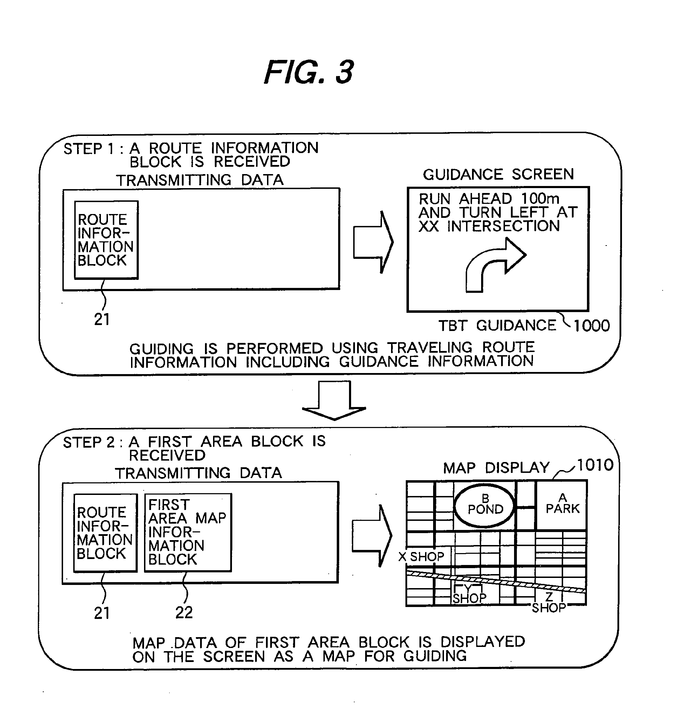

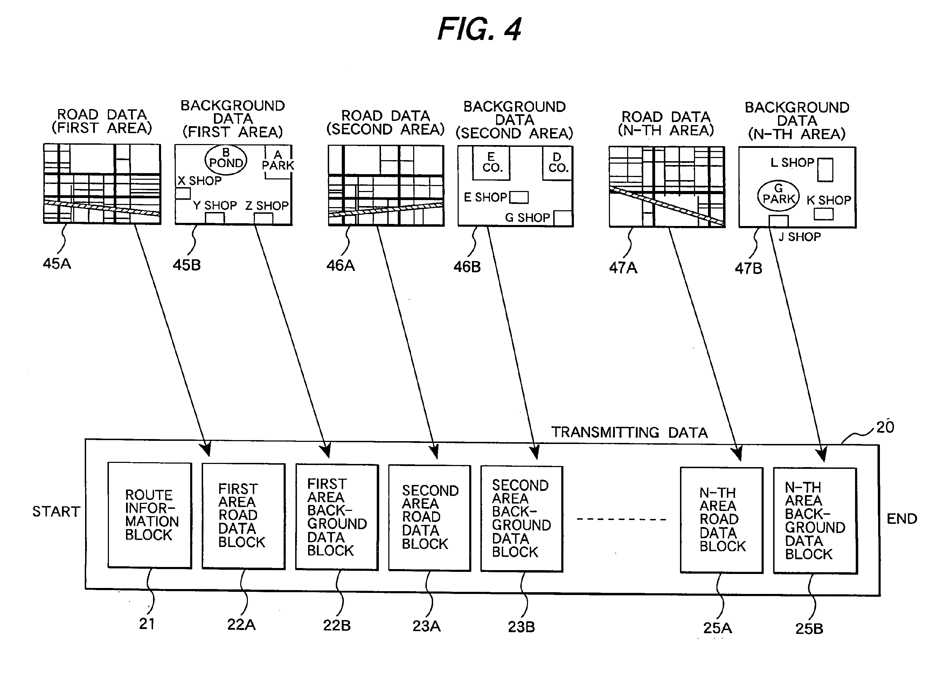

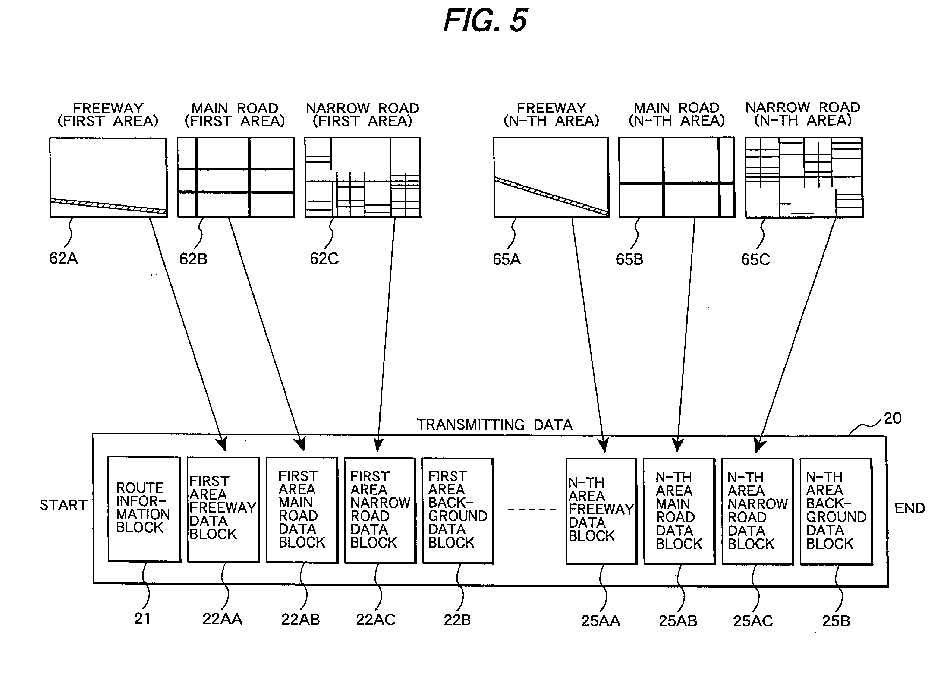

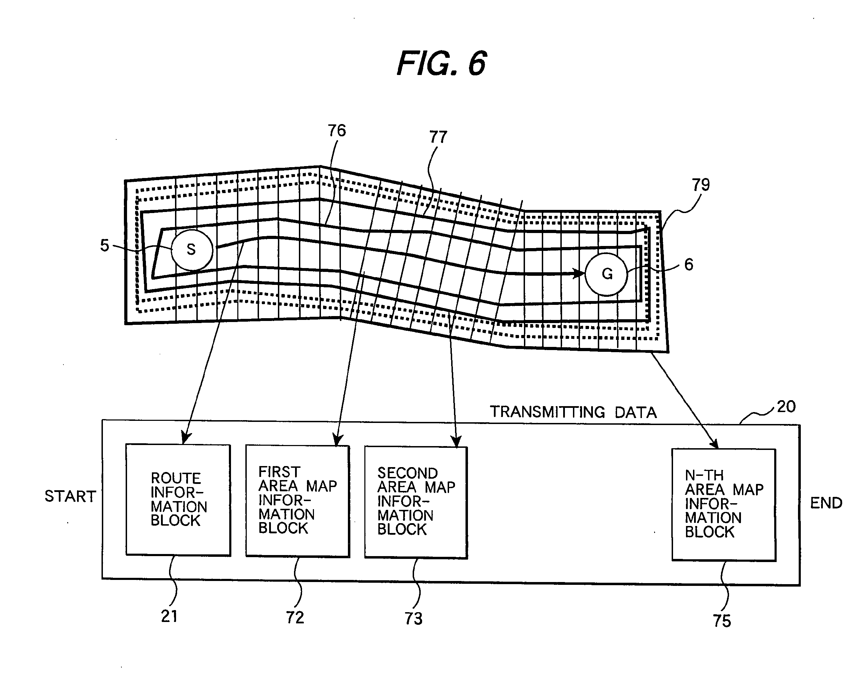

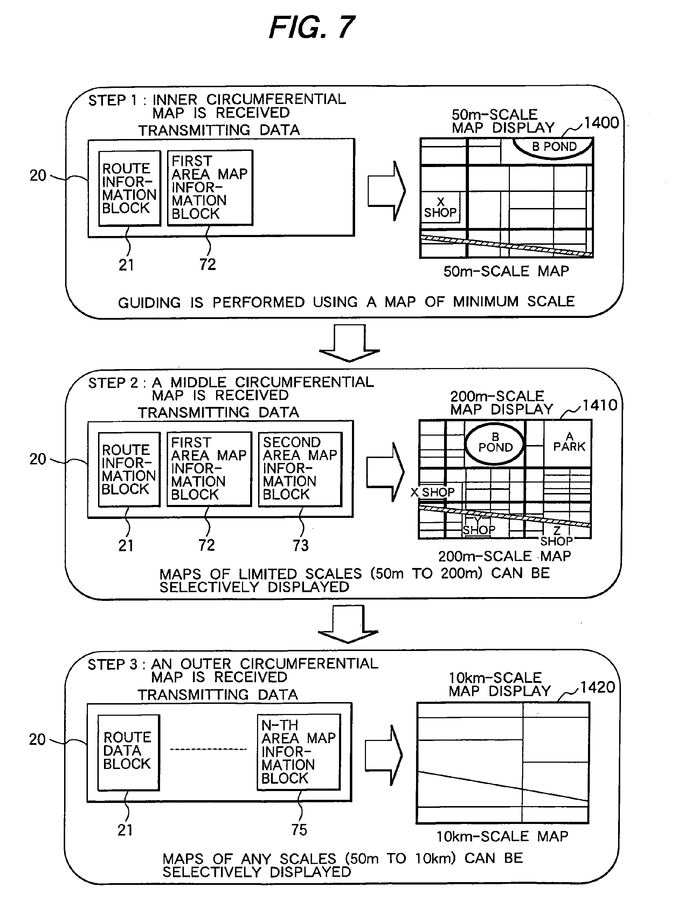

FIG. 1 is a drawing showing the configuration of a communication type navigation system using a mobile phone network to which the present invention is applied. FIG. 2 is a system drawing showing a first embodiment of a map data transmitting method in the communication type navigation system. FIG. 3 is a drawing for explaining a map display and guidance start timing in the first embodiment of an on-vehicle terminal in the communication type navigation system. FIG. 4 is a drawing showing transmitting data and areas in the first embodiment of the map data transmitting method in the communication type navigation system. FIG. 5 is a drawing showing the transmitting data and areas in a second embodiment of the map data transmitting method in the communication type navigation system. FIG. 6 is a drawing showing the transmitting data and areas in a third embodiment of the map data transmitting method in the communication type navigation system. FIG. 7 is a drawing for explaining the map display and guidance start timing in the third embodiment of the on-vehicle terminal in the communication type navigation system.

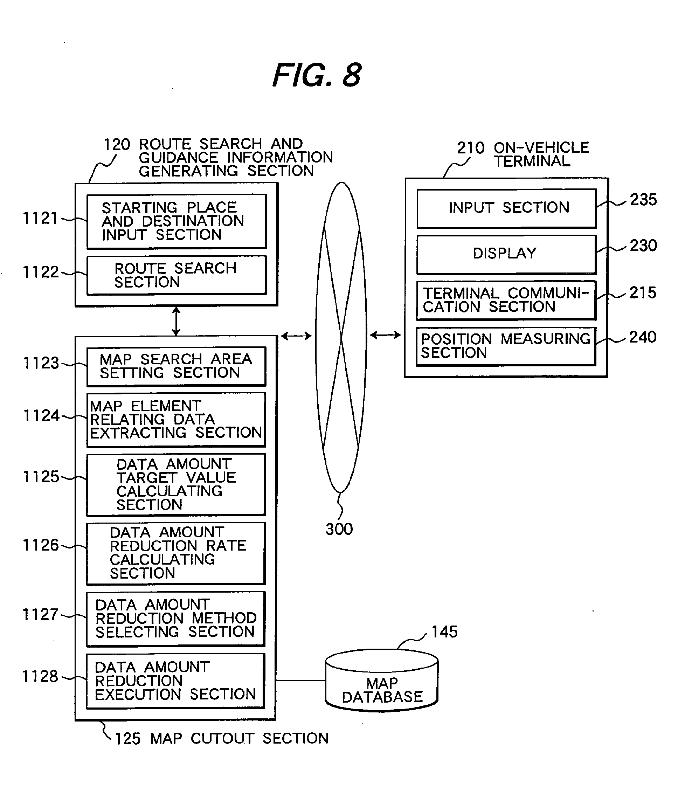

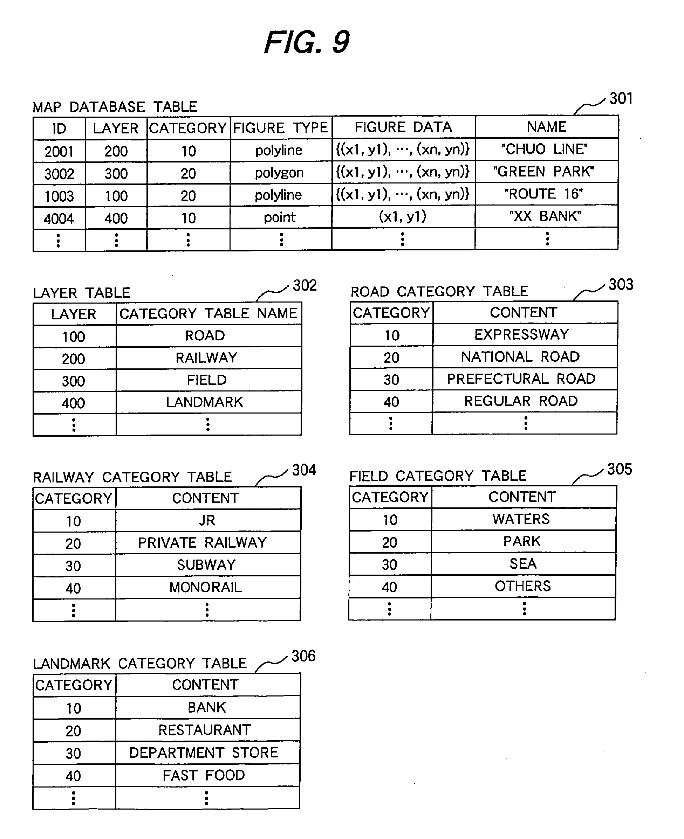

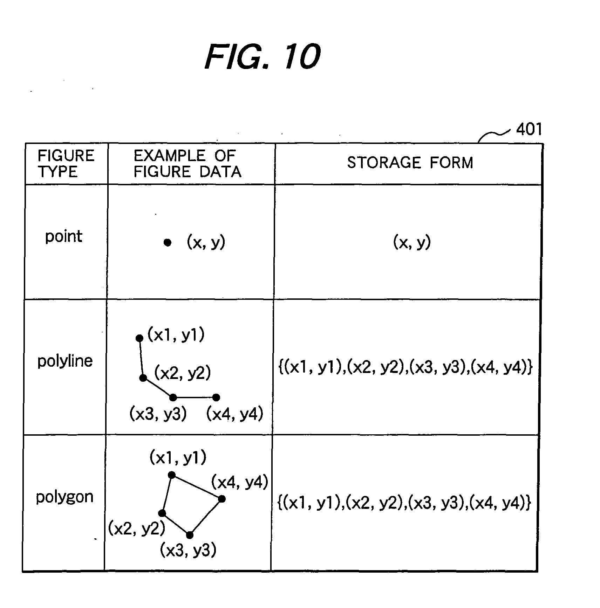

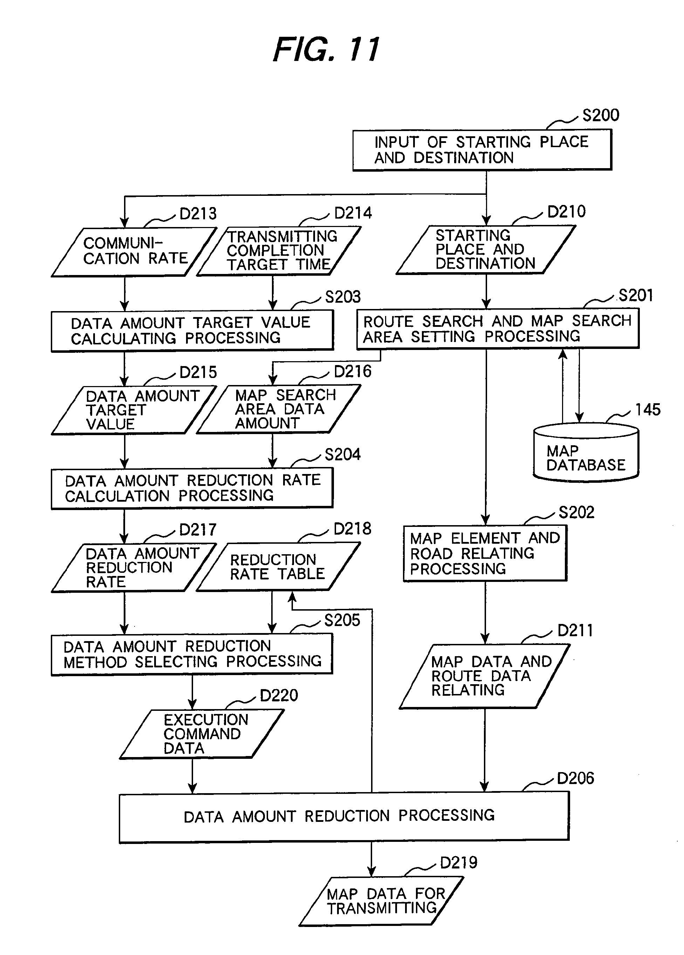

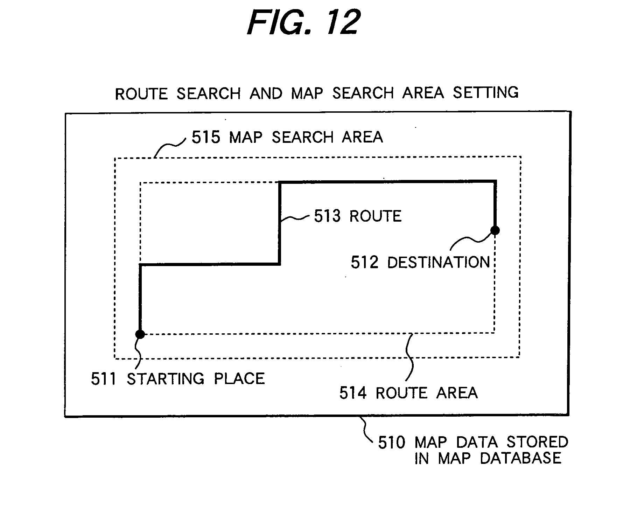

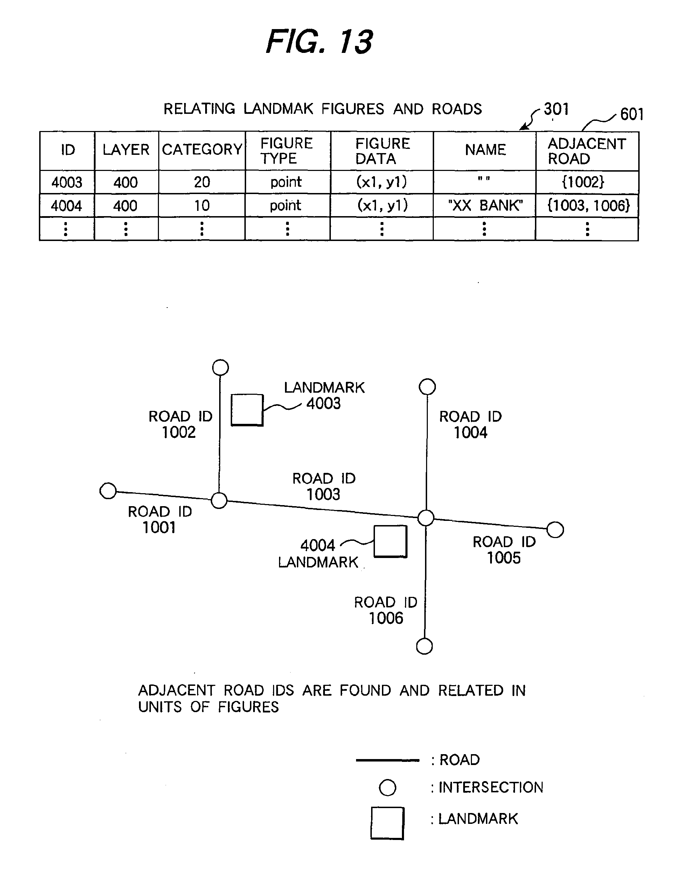

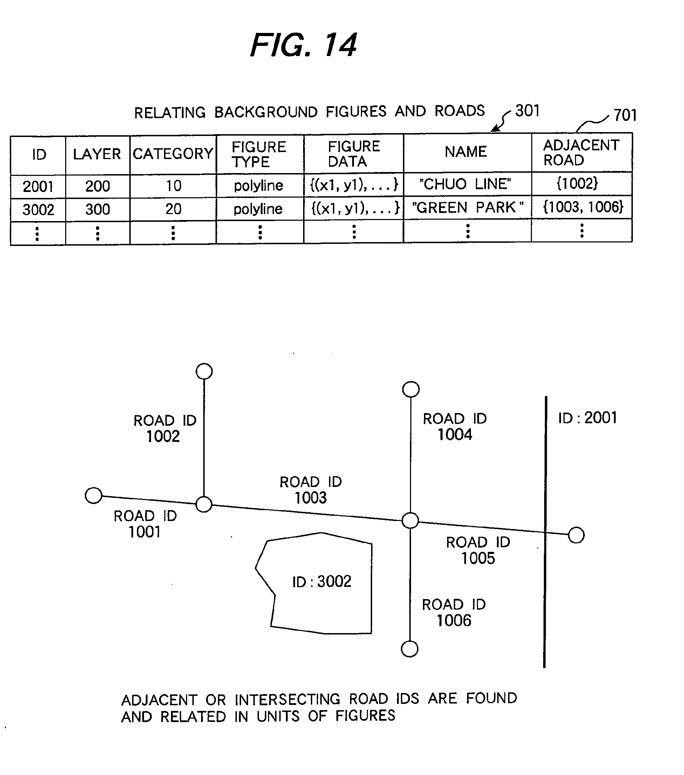

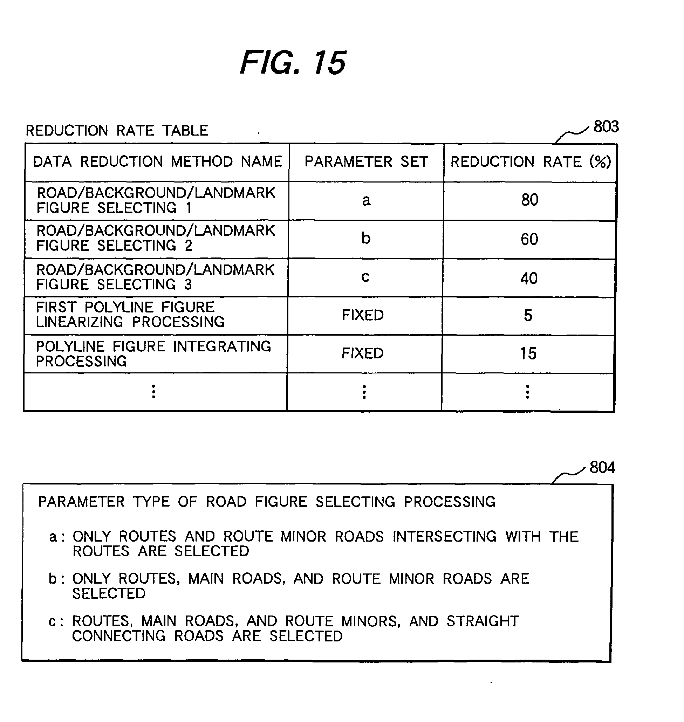

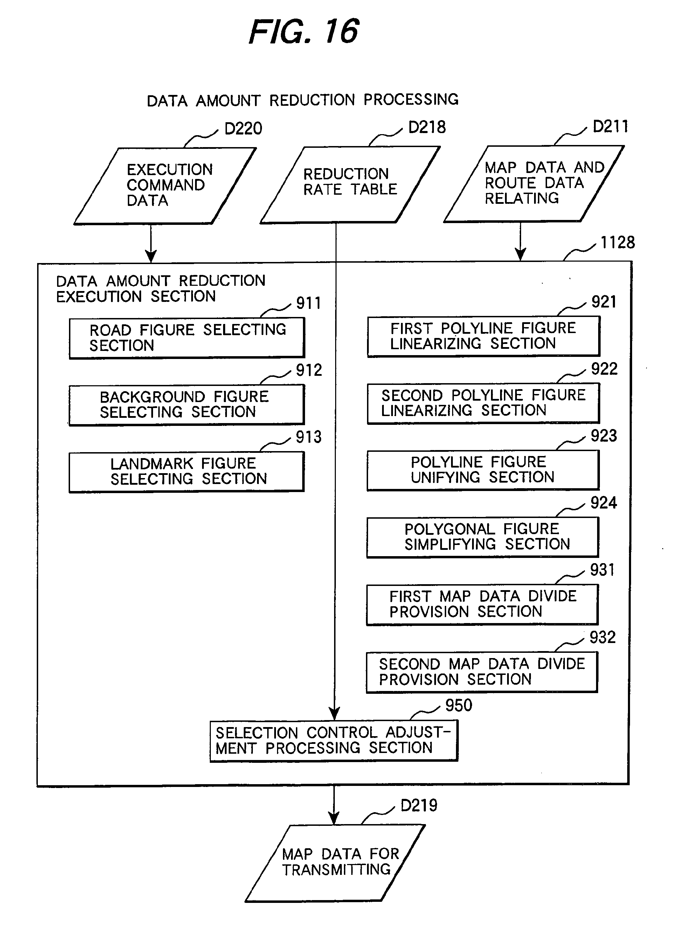

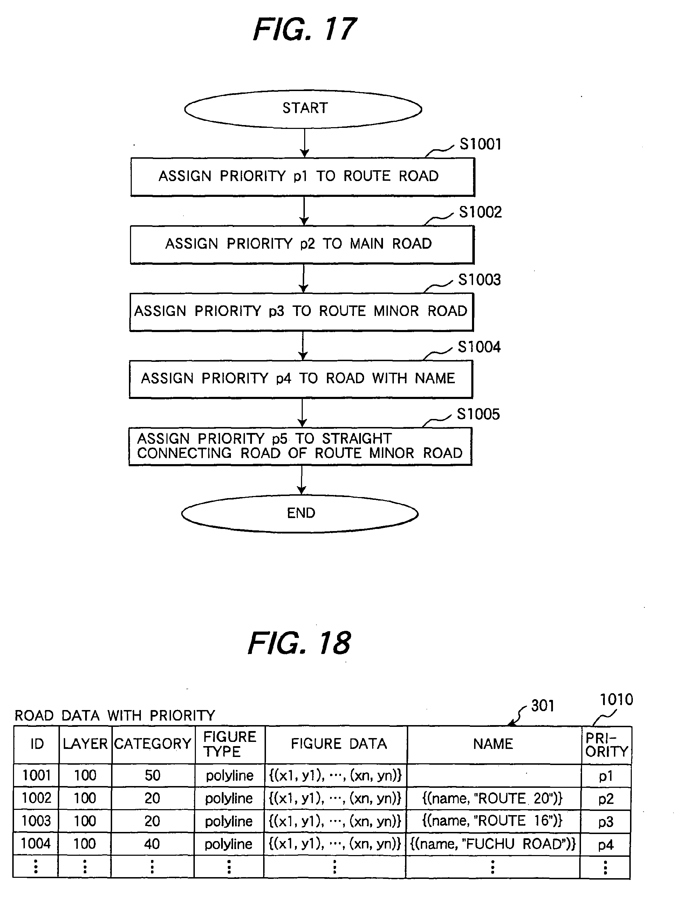

FIG. 8 is a drawing for explaining the concept of a map information providing system of the present invention. FIG. 9 is a drawing for explaining the contents of a map database of the present invention. FIG. 10 is a drawing for explaining structures of figure data of the map database of the present invention. FIG. 11 is a drawing for explaining the flow of processing of the map information providing system of the present invention. FIG. 12 is a drawing for explaining route search processing and map search area setting processing of the map information providing system of the present invention. FIG. 13 is a drawing for explaining the processing of relating landmark figures and roads of the map information providing system of the present invention. FIG. 14 is a drawing for explaining the processing of relating background figures and roads of the map information providing system of the present invention. FIG. 15 is a drawing for explaining the contents of a reduction rate table of the map information providing system of the present invention. FIG. 16 is a drawing for explaining operation in a data reduction execution section of the map information providing system of the present invention. FIG. 17 is a flowchart for explaining operation in a road figure selecting section of the data reduction execution section of the present invention. FIG. 18 is a drawing for explaining the processing of assigning priorities to road data in the data reduction execution section of the present invention.

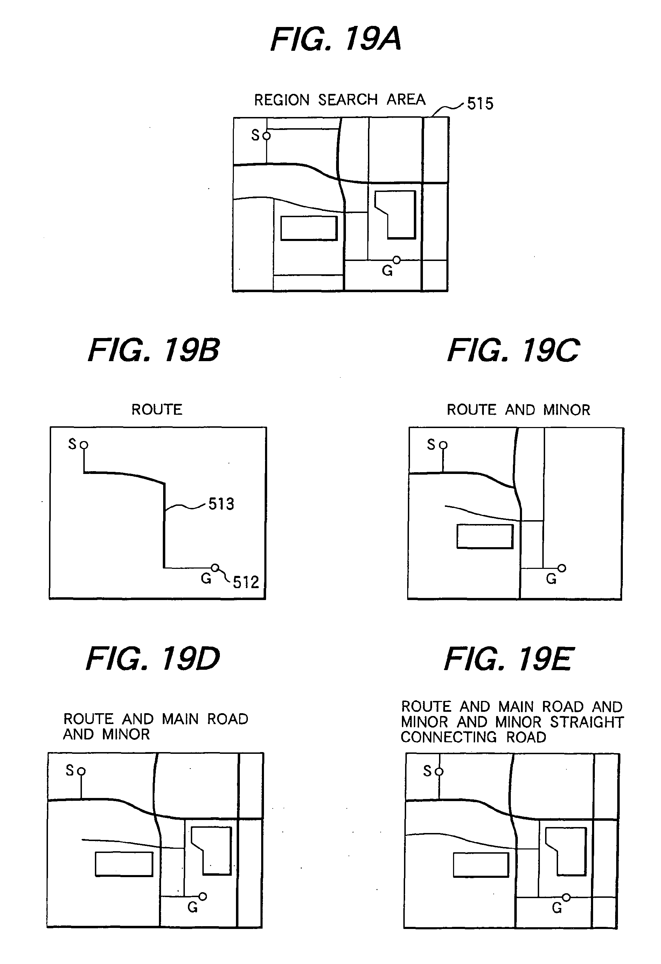

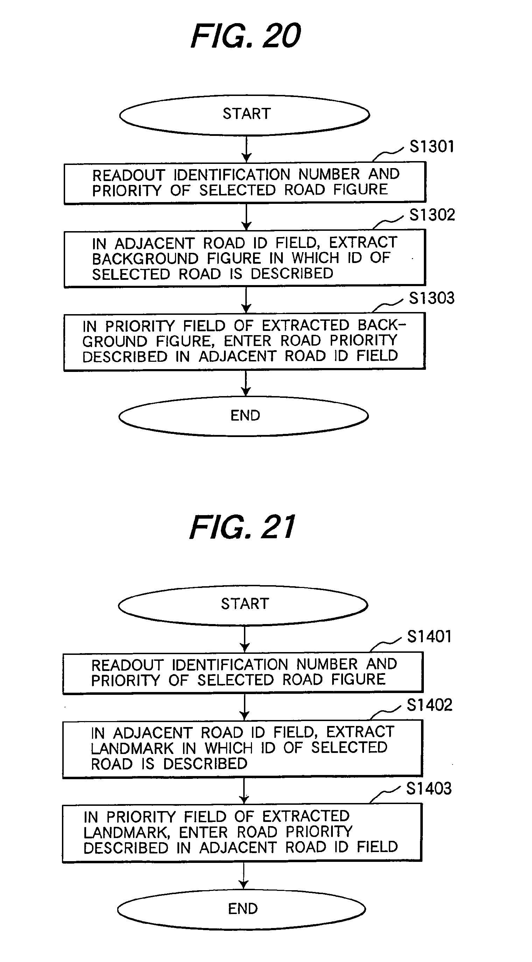

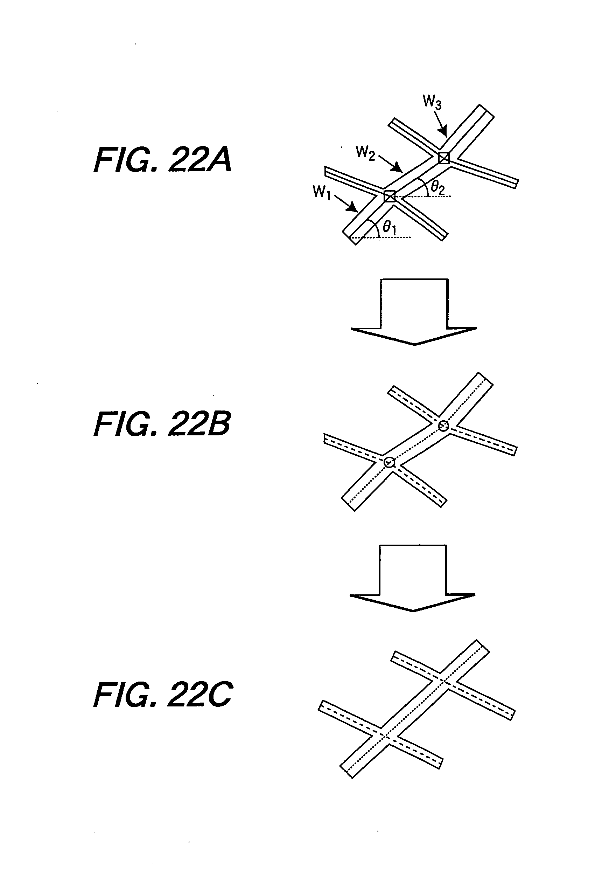

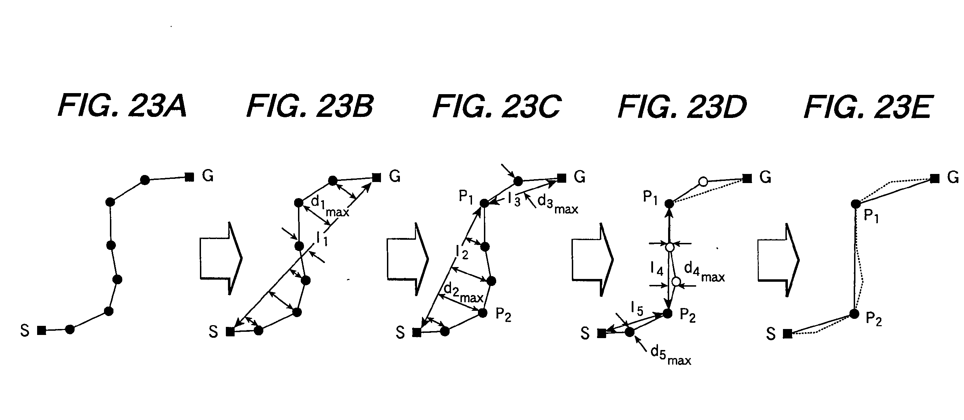

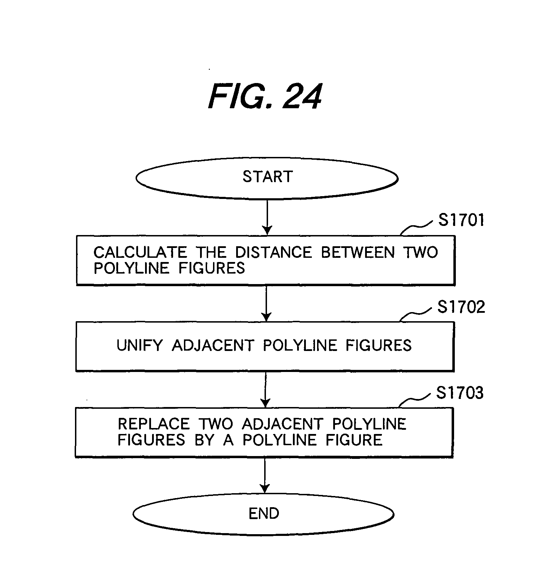

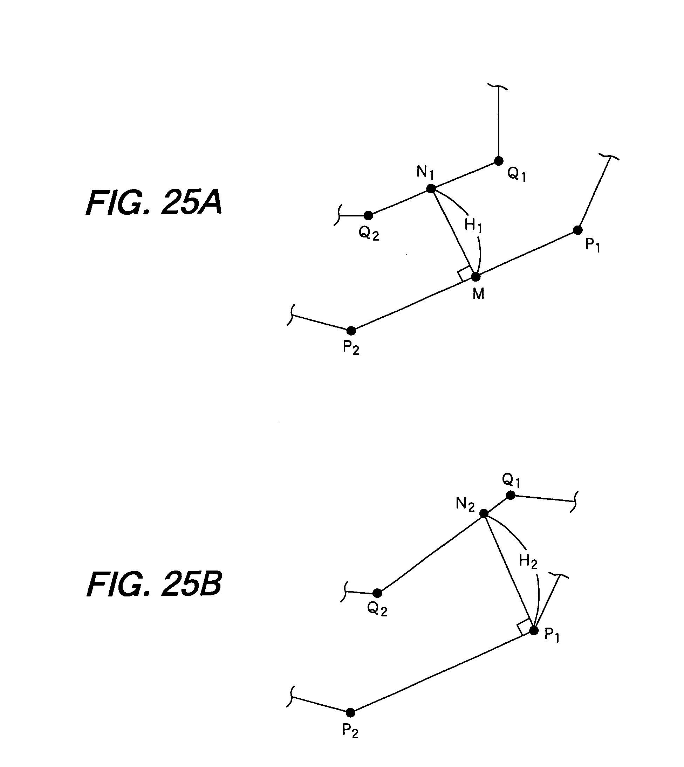

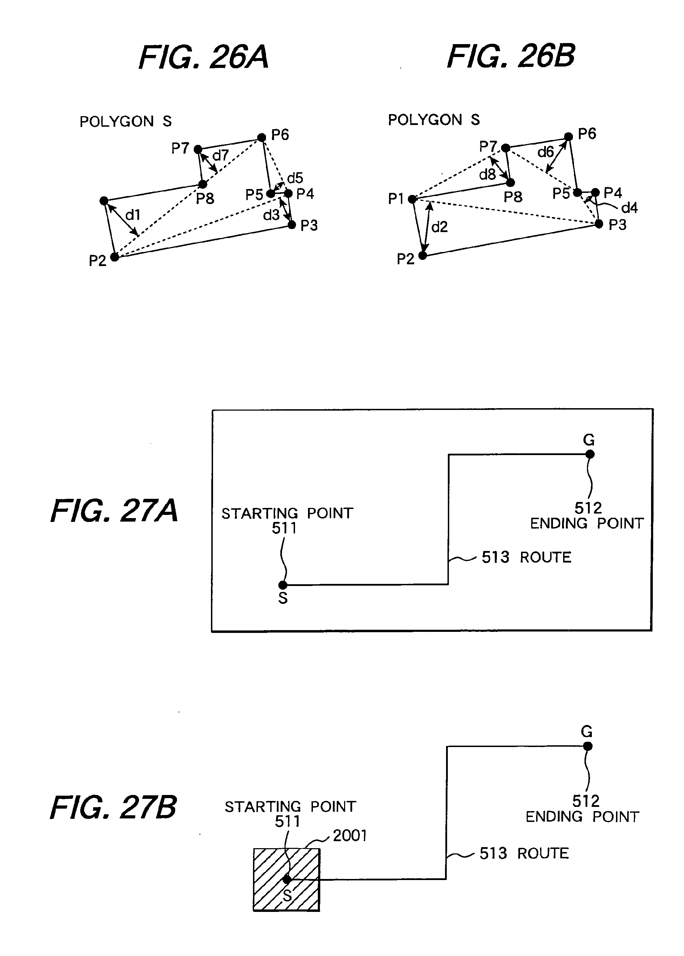

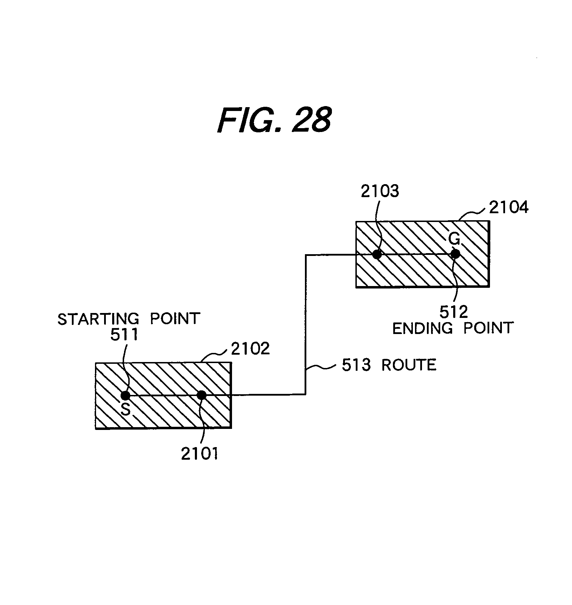

FIG. 19 is a drawing for explaining the operation of a road figure selecting section of the data reduction execution section of the present invention. FIG. 20 is a drawing for explaining the processing of a landmark figure selecting section of the data reduction execution section of the present invention. FIG. 21 is a drawing for explaining the processing of a background figure selecting section of the data reduction execution section of the present invention. FIG. 22 is a drawing for explaining the processing of a first polyline figure linearizing section of the data reduction processing section of the present invention. FIG. 23 is a drawing for explaining the processing of a second polyline linearizing section of the data reduction execution section of the present invention. FIG. 24 is a drawing for explaining the processing of a polyline figure integrating section of the data reduction execution section of the present invention. FIG. 25 is a drawing for explaining the distance between polyline figures in a polyline figure integrating section of the data reduction execution section of the present invention. FIG. 26 is drawing for explaining the processing of a polygonal figure simplifying section of the data reduction execution section of the present invention. FIG. 27 is a drawing for explaining the processing of a first map data dividing transmission section of the data reduction execution section of the present invention. FIG. 28 is a drawing for explaining the processing of a second map data divided transmission section of the data reduction execution section of the present invention.

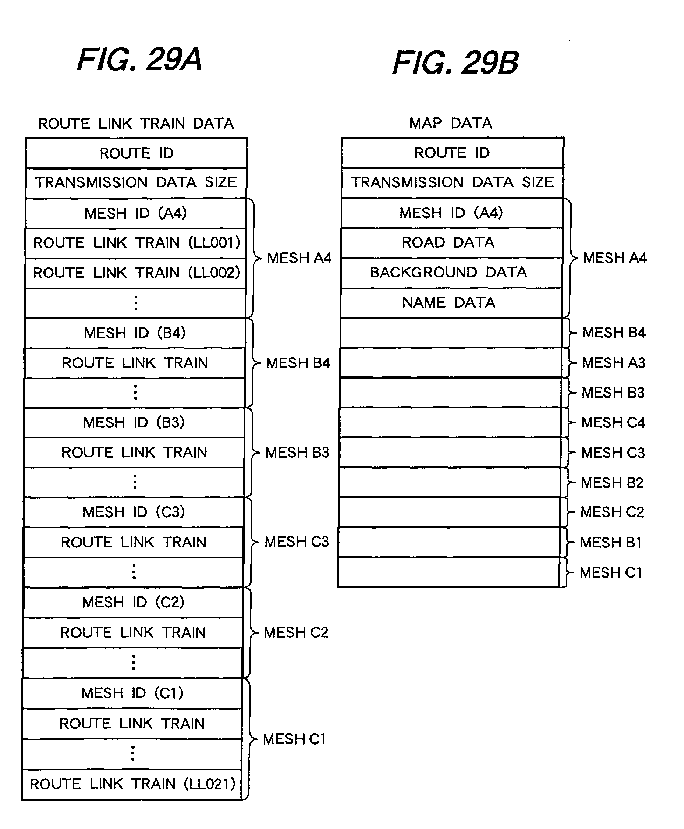

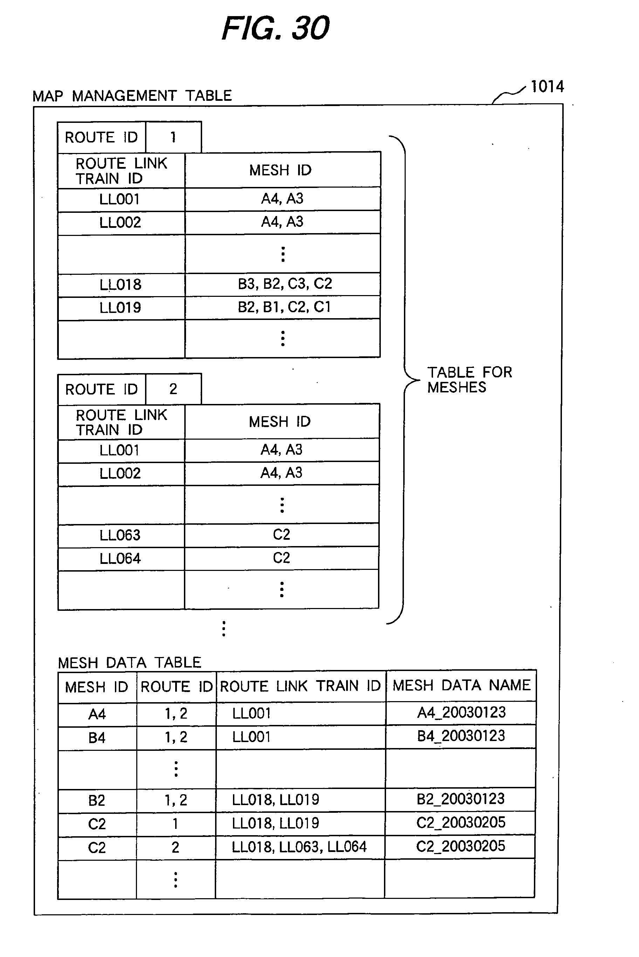

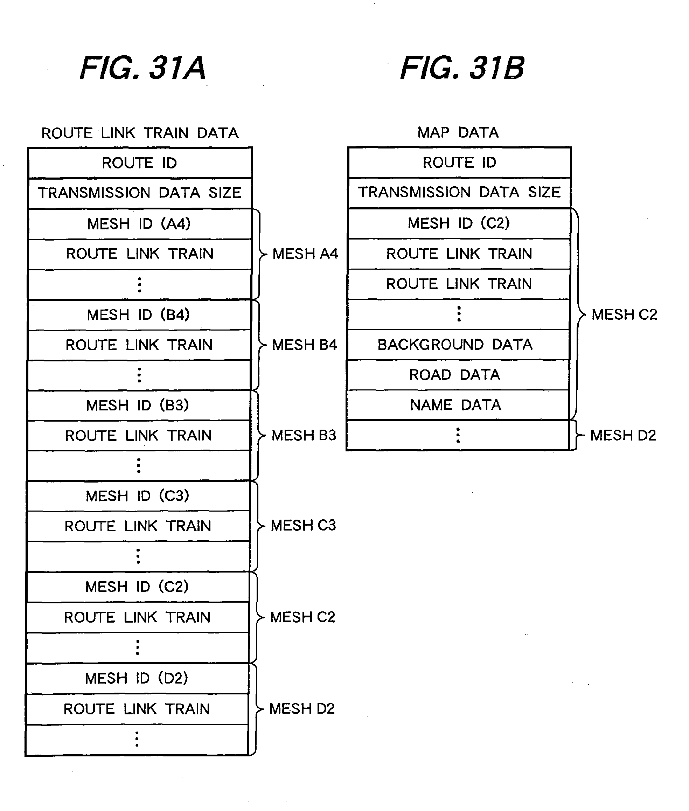

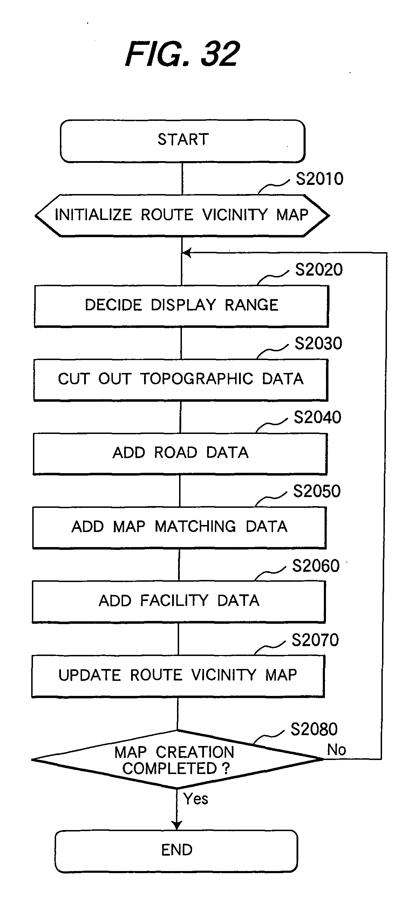

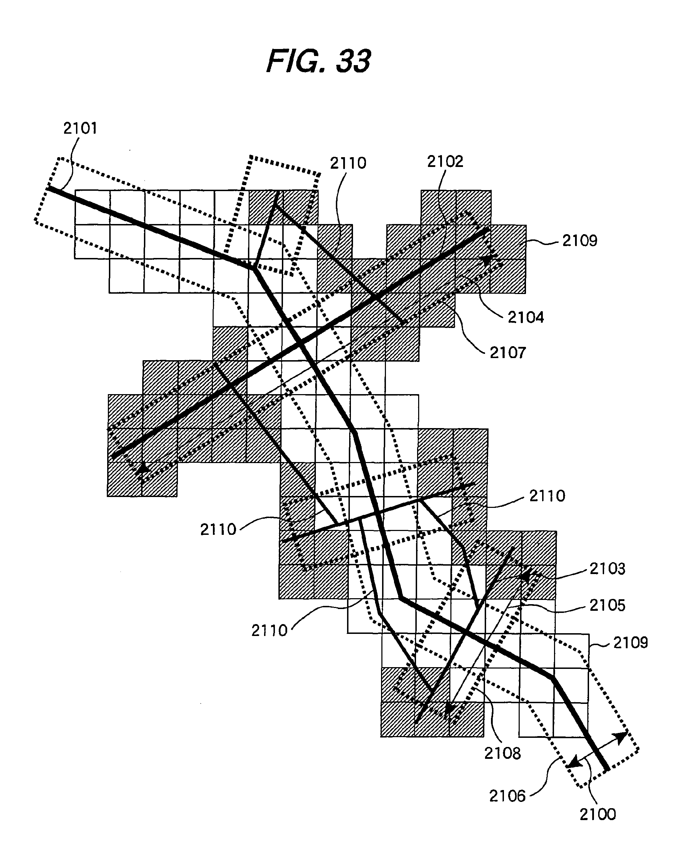

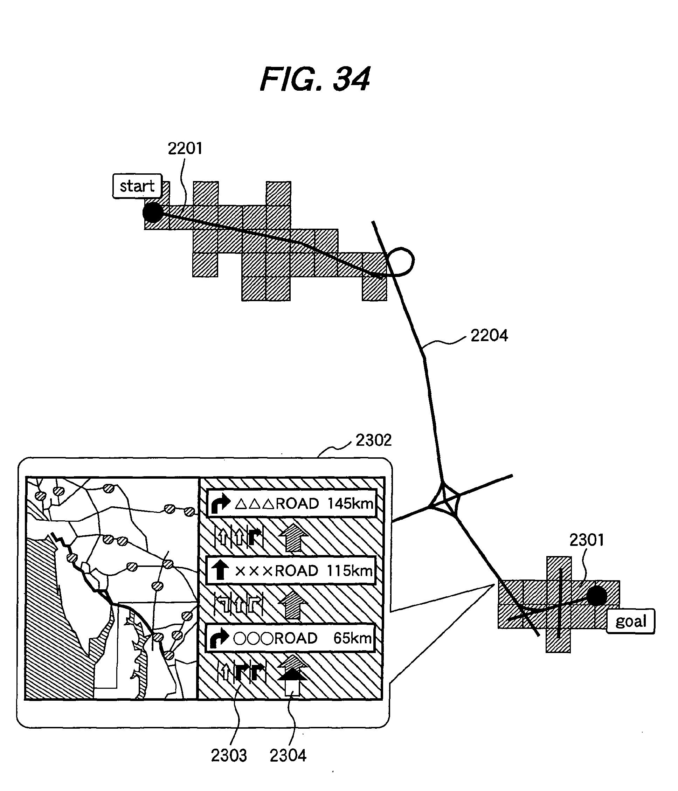

FIG. 29 is drawing showing an example of transmission data in an example of cutting out a map along a route. FIG. 30 is a drawing showing an example of a map management table. FIG. 31 is drawing showing an example of transmission data in another example of cutting out a map along a route. FIG. 32 is a flowchart showing the processing of generating a route vicinity map according to an embodiment of the present invention. FIG. 33 is an image drawing showing the processing of deciding a display range according to an embodiment of the present invention. FIG. 34 is an image drawing showing a route vicinity map including a freeway according to an embodiment of the present invention.

BEST MODE FOR CARRYING OUT THE INVENTION

FIG. 1 is a drawing showing the configuration of a communication type navigation system using a mobile phone network to which the present invention is applied. In FIG. 1, a map provision center 100 provides map information, traffic information, and other information to each vehicle 200. The map provision center 100 includes a map provision server 110 which searches for a route according to a request from the vehicle 200 and transmits a map based on the route search result. The vehicle 200 includes an on-vehicle terminal 210, which transmits the vehicle position or a destination to the map provision server 110 to request a calculation of a traveling route, receives a map transmitted from the map provision server 110, and displays the map on the screen. The map provision server 110 and the on-vehicle terminal 210 perform communications with each other through a mobile phone network 300. Communications between the map provision server 110 and the on-vehicle terminal 210 may be performed not only through a mobile phone network 300 but also PHS networks, satellite communication channels, hot spots accessible to the Internet in special areas over wireless LAN.

The map provision server 110 includes the following sections: a server communication section 115 for communicating with the on-vehicle terminal 210; a route search / guidance information calculation section 120 for searching for a traveling route between a starting place and a destination by using the vehicle position information and destination information transmitted from the on-vehicle terminal, and calculating guidance information on the traveling route; a map database 145 that stores road data including road types such as freeway, main road, and narrow road, their road names, and their road shapes, and background data including names other than road names such as place name and landmark name, and shape data of items other than roads such as river, sea, golf course, and airport; a map cutout section 125 that extracts (hereinafter, this operation is referred to as cutout) map information of a part of region/area from map information stored in the map database 145, based on traveling route information or guidance information calculated by a route search/guidance information calculation section 120; a transmission format conversion section 130 that converts map information cut out by the map cutout section 125 into a format (it is also called as a transmission format) for minimizing a data amount so that can be transmitted over the mobile phone network 300; a transmission priority management section 135 that sets a transmission order of areas of map information or information types such as road and background, and based on the set transmission order, issues a cutout command to the map cutout section 125, a format conversion request to the transmission format conversion section 130, or a communication request to the server communication section 115; and a server control section 140 that controls the flow of overall processing of the map provision server 110. The map database 145 may be a database that stores not only map information but also real-time information such as information of crowded degree in restaurants, parking lots, and GS (gasoline station), and traffic information indicating no thoroughfare under construction, and heavy traffic congestion due to the holding of an event. In the road data, freeways refer to expressways, main roads refer to national roads and prefecture roads, and narrow roads refer to narrow roads existing in residential areas.

The on-vehicle terminal 210 includes a terminal communication section 215 communicating with the map provision server 110; a transmission format restoration section 220 that restores map data converted into a format for transmitting (the map data has been received in the terminal communication section 215) to enable it to be handled in the on-vehicle terminal; a map data storage/management section 225 that stores and manages map dada restored by the transmission format restoration section 220 and traveling route including guidance information; a terminal display section 230 that displays the map data stored in the map data storage/management section 225; an input section 235 that inputs destination setting information, map scale setting information and scroll commands; and a position measuring section 240 that measures a current position of the vehicle 200. The on-vehicle terminal 210, when already having received map data of the vehicle position and the vicinity, displays the map data by using traveling route information including map data and guidance information and vehicle position information which have been already received. Incidentally the vehicle position information is got from the position measuring section 240. On the other hand, when map data has not been received though guidance information has been received, the on-vehicle issues guidance for vehicle by using the guidance information without using map data (for example, indicates traveling directions by guidance direction and arrow indications and voice).

The on-vehicle terminal 210 also includes a map display / guidance management section 245 and a terminal control section 250. The map display / guidance management section 245, when background data of the vehicle position and the vicinity has not been received though road data of the vehicle position and the vicinity has been received, displays a map with only road information. Further the section 245 sets map display contents or guidance contents according to type of the received contents. The terminal control section 250 controls the flow of overall processing of the on-vehicle terminal 210.

In this embodiment, the position measuring section 240 is a device which measures positions by GPS radio waves received by a GPS (Global Positioning System) receiver, but positions may be measured using vehicle speed pulses, gyro, a geomagnetic sensor, or a combination of them. The input section 235 may be a remote control, a touch panel, a voice recognition input, or the like. Furthermore, as an alternative to the on-vehicle terminal 210, a portable terminal such as PDA or a cellular phone having GPS and other functions may be used.

The following describes a processing of transmitting map data by use of the transmission format between the map provision server 110 and the on-vehicle terminal 210. The map provision server 110 converts map data stored in the map database 145 into the transmission format in the format conversion section 130, and transmits the converted map data to the on-vehicle terminal 210 from the server communication section 115.

In the on-vehicle terminal, the terminal communication section 215 receives the converted map data, the transmission format restoration section 220 restores the map data (having the transmission format) received with the terminal communication section 215 to map data that can be handled in the on-vehicle terminal, and the map data storage/management section 225 stores the restored map data.

FIGS. 2 to 4 show a first embodiment of a map data transmitting method and a map information reception terminal (on-vehicle terminal) in a communication type navigation system. In the present embodiment, in the on-vehicle terminal 210, the position measuring section 240 measures a current position of the vehicle 200, the driver sets a destination through the input section 235, the current position information and destination information are transmitted to the map provision server 110 from the on-vehicle terminal 210.

In the map provision server 110, the route search / guidance information section 120 searches for a traveling route 11 between a starting place corresponding to the current position information and a destination corresponding to the destination information. The searched traveling route is an optimum traveling route between the starting place 5 and the destination 6 because, for example, the route is a route where traveling time is minimum, a route that least uses toll roads, or a route suitable for driving because of broad roads and few curves. The map cutout section 125 extracts map information 10 of the traveling route 11 and the vicinity from the map database 145.

A transmission order of the map data will be described with reference to FIG. 2. In the map provision server 110, the transmission format conversion section 130 performs format conversion for the traveling route information including guidance information searched for by the route search/guidance information calculation section 120. The data of a route information block 21 comprising the converted traveling route information including guidance information is transmitted to the on-vehicle terminal 210 from the server communication section 115.

The transmission priority management section allocates areas, based on any one of the following:

> (1) Allocate areas so that a map data amount in each area is almost equal. Specifically, small areas are cut out for urban areas and other areas that have dense data amounts, while large areas are cut out for suburban areas and other areas that have coarse data amounts.
> (2) Allocate areas so that the calculating times of a map cutout processing, a transmission format conversion processing, and a transmission processing in each area are evaluated, and the sum total of the these times is almost constant among the areas.
> (3) Allocate areas so that the route length of a traveling route contained in each area is almost constant among the areas.

By thus allocating areas, map data can be transmitted at an almost constant interval of time. Also, idle time (time during which map data for an area is being cut out and no data is transmitted) which is interval between the transmissions of map data for different areas can be minimized.

In the present embodiment, in the map provision server 110, the transmission format conversion section 130 performs format conversion for the traveling route information including guidance information searched for by the route search/guidance information calculation section 120. The server communication section 115 transmits the converted data 2 (route information block 21) to the on-vehicle terminal 210. Then, the map provision server 110 repeats the following processing according to instructions from the transmission priority management section 135. That is, the processing are amap cutout processing, a transmission format conversion processing and a transmission processing for each area, and these processing are carried out from an area of the starting place side toward an area of the destination side in order. In the map cutout processing, map information of each area is cut out separately to road data and background data.

According to the present embodiment, since map information blocks are divided into road data blocks and background data blocks, a map can be displayed upon reception of road data blocks obtained earlier, without waiting for reception of background data blocks. By receiving background data blocks obtained after reception of the road data blocks, the background data is overlaid on the map on which only the road data is displayed, so that complete map data is displayed. By thus displaying road data and background data on a map successively in stages (progressively), the map can be used in the course of map data reception.

A transmission order of the map data will be described referring to FIG. 4. In the map provision server 110, first, the route information block 21, which is comprised of traveling route information including the guidance information, is transmitted to the on-vehicle terminal. Next, the road data of first area 12 (the starting place and the vicinity) is cut out by the map cutout section 125 according to a map cutout order set in advance along the route. The road data of the first area 12 is converted into the transmission format by the format conversion section 130, and the converted road dada (first area road data block 22A) is transmitted via the server communication section 115. Further, the background data 12 of the first area (the starting place and the vicinity), is cut out by the map cutout section 125. The background data of the first area 12 is cut out into the transmission format by the format conversion section 130, and the converted background data (first area background data block 22B) is transmitted via the server communication section 115.

Further, the road data of the second area 13, namely the road data adjacent to the destination side of the first area, is cut out by the map cutout section 125. The road data of the second area 13 is converted into the transmission format by the format conversion section 130, and the converted road data (second area road data block 23A) is transmitted via the server communication section 115. Then, the background data of the second area 13 adjacent to the destination side of the first area is cut out by the map cutout section 125. The background data of the second area 13 is converted into the transmission format by the format conversion section 130, and the converted background data (second area background data block 23B) is transmitted via the server communication section 115.

Thus, cutting out road data and background data for each block of such an area adjacent to the destination side, converting them into the transmission format conversion and transmitting them after converting are performed. The map provision server 110 repeats this processing until transmitting the N-th area road data block 25A being a block of a destination area 16, then an N-th area background data block 25A being a block of the destination area.

The transmission priority management section 135 directs a series of processing relating to the transmission of route information and the transmission of road data and background data. It also sets areas of data and background data that are to be cut out.

The following describes the on-vehicle terminal 210 side. In the on-vehicle terminal 210, first, the route information block 21, which is comprised of traveling route information including guidance information, is received. Subsequently, the road data block and the background data block for each area adjacent to the destination side in order are alternately received. The priority order for receiving those blocks is set so that the first area side (the starting place side) is higher than the N-th area side (the destination side). Accordingly, the N-th area road data block 25A and the N-th area road data block 25B are finally received.

Guidance start and map display timing are performed as shown in FIG. 3. In Step 1, after receiving the route information block 21, the on-vehicle terminal 210 displays the following information at the next guidance point on the terminal display section 230 (guidance screen 1000). The displayed information is comprised of the guidance direction, the name of the intersection and the name of the road where the vehicle should take a turning at the next guidance point. The information is displayed by using the guidance information of the route information block 21 already received without waiting for the completion of the reception of the first area map information block 22. Further the on-vehicle terminal outputs a distance to the next intersection and the turning direction corresponding to the name of road where the vehicle should take a turning to start guidance for vehicle (turn-by-turn guidance).

In the next Step 2, upon receiving the data of the first area map information block 22, the on-vehicle terminal 210 immediately displays map data of the vehicle position and the vicinity on the terminal display section 230 by using the received first area map information block 22. In short, the turn-by-turn guidance mode displayed in Step 1 is switched to a map display mode. The switching is determined as follows. The map data storage/management section 225 determines whether map data exists. On the determination result, the map display /guidance management section 245 sets the map display mode when map data exists, and otherwise sets the turn-by-turn guidance mode.

After receiving the route information block 21 and the first area road data block 22A of the starting place and the vicinity 112, the on-vehicle terminal 210 displays a road map in which road data of the vehicle position and the vicinity is drawn, on the terminal display section 230. The displaying is carried out without waiting for the completion of the reception of the first area background data block 22B, and the guidance for vehicle starts. Upon the completion of the reception of first area background data block 22B, the on-vehicle terminal 210 superimposes the background data on the road map already drawn in the terminal display section 230 to display a complete map (a state in which roads and backgrounds are combined).

By thus performing map display and guiding, although the on-vehicle terminal 210 cannot display a map of the starting place and the vicinity to the driver, it can start the guidance for vehicle before receiving the map data. The on-vehicle terminal 210 can display a map upon reception of a road data block obtained earlier without waiting for reception of all data including background data blocks, and can quickly start the guidance. By thus displaying road data and background data on a map successively in stages, the on-vehicle terminal 210 can use the map in the course of map data reception. The driver can view the map without waiting for the acquisition of the map data of the whole route, and the on-vehicle terminal 210 can quickly start the guidance.

In the present embodiment, although having described that the guidance screen 1000 is displayed on the terminal display section 230, the on-vehicle terminal 210 may start the guidance by only voice without displaying the guidance screen 1000.

The following describes a guidance method in cases where the reception of map data of the vehicle position and the vicinity can not be completed after starting the guidance. Such cases where the reception of map data can not be completed are as follows: decreased communication speeds of the mobile phone network due to the congestion of the mobile phone network and bad wave situations; frequent occurrences of errors and repeated retransmissions due to bad wave situations.

In theses cases, Step 2 assumes the situation in which the vehicle 200 travels to X-th area and the reception of the map data of the X-th area (X area map information block 1030) is not completed. At this time, whether X area map information block 1030 exists or not is determined by the memory and map data management section 225. When it is determined that there is no X-th area map information block 1030, in the same way as start of the above guidance, a guidance screen 1011 is displayed on the terminal display section 230 for guidance by using the route information of the route information block 21 already acquired. In short, the map display/guidance management section 245 switches the display mode to the turn-by-turn guidance mode.

On the other hand, in the situation in which the reception of map data (X-th area map information block 1030) of the vehicle position (X area) and the vicinity is completed, as Step 3, a map screen 1020 of X-th area is displayed on the terminal display section 230 by using the received X-th area map information block 1030. In short, the map display/guidance management section 245 switches the display mode to the map display mode.

By doing so, even when the reception of the map data of the vehicle position and the vicinity is not in time for the guidance, the guidance can be continued. In short, route deviation due to interruption of guidance can be prevented.

Although the foregoing description assumes that the reception map data of X-th area is not completed, there may be a case where a map of the X-th area cannot be received due to a communication error. In such a case, the guidance for vehicle is performed in the turn-by-turn guidance mode in the course of traveling through the X-th area.

FIG. 5 shows a second embodiment of a map data transmitting method and a map information receiving terminal (on-vehicle terminal) in the communication type navigation system. Unlike the first embodiment in which map information is divided into road data and background data, in the second embodiment, the road data is further divided into freeway data, main road data, and narrow road data for transmitting.

With reference to FIG. 5, a description will be made of a transmission order of map data divided into freeway data, main road data, narrow road data, and background data. First, the map provision server 110 transmits the route information block 21 comprising traveling route information including guidance information. Next, according to a map cutout range provided in advance along the route, the freeway data of first area 12(the starting place and the vicinity)is cut out by the map cutout section 125, and converted into the transmission format by the format conversion section 130. The converted freeway dada (first area freeway block 22AA) is transmitted via the server communication section 115. Further, the main road data of the first area 12 (the starting place and the vicinity is cut out by the map cutout section 125, and converted into the transmission format by the format conversion section 130. The converted main road data (first area main road data block 22AB) is transmitted via the server communication section 115. Then, the narrow road data of the first area 12 (the starting place and the vicinity) is cut out by the map cutout section 125, and converted into the transmission format by the format conversion section 130. The converted main road data (first area narrow road data block 22AC) is transmitted via the server communication section 115. Furthermore, the background data of the first area 12 (the starting place and the vicinity) is cut out by the map cutout section 125, and converted into the transmission format by the format conversion section 130. The converted background data (first area background data block 23) is transmitted via the server communication section 115.

Furthermore, the same processing as that of the starting place and the vicinity is performed for freeway data, main road data, narrow road data, and background data that relate to the second area 13 adjacent to the destination side of the first area. And second area freeway data block 23AA, second area main road data block 23AB, second area narrow road data block 23AC, and second area background data block 23B are transmitted in that order. These processing are repeated up to N-th area 16, and finally blocks of a destination area including N-th area freeway data block 25AA, N-th area main road data block 25AB, N-th area narrow road data block 25AC, and N-th area background data block 25B are transmitted in that order. A series of these processing are instructed by the transmission priority management section 135.

The following describes the on-vehicle terminal side 210. A difference from the first embodiment is in map data receiving order. Specifically, in the on-vehicle terminal 210, first, route information block 21, which is comprised of traveling route information including guidance information, is received. Then, the first area freeway data block 22AA of the starting place and the vicinity, the first area main road data block 22AB, the first area narrow road data block 22AC, and the first area background data blocks 22B are received in that order. Subsequently, the second area freeway data block 23AA adjacent to the destination side of first area freeway data block 22AA, the second area main road data block 23AB, the second area narrow road data block 23AC, and the second area background data block 23B are received in that order. After blocks of areas adjacent to the destination side are successively received, the N-th area freeway data block 25AA being a block of the destination area, N-th area main road data block 25AB, the N-th area narrow road data block 25AC, and the N-th area background data block 25B are finally received in that order. In the same way as in the embodiment described previously, data blocks received earlier are overlaid and displayed earlier on the screen.

By thus performing map display and guiding, a map can be displayed upon reception of freeway data blocks acquired earlier without waiting for all road data or background data. Since freeway data, main road data, narrow road data, and background data are displayed on a map in stages in that order, the map can be used in the course of map data reception. A series of the map display switching processing are instructed by the map display and guidance management section 245.

By these arrangements, the driver can view the map without waiting for acquisition of all map data, and the on-vehicle terminal 210 can quickly start the guidance for vehicle.

FIGS. 6 and 7 show a third embodiment of a map data transmitting method and a map information receiving terminal (on-vehicle terminal) in the communication type navigation system. In an example shown in the third embodiment, the map transmitting is performed as follows. Map information cutout areas are divided along the shape of a searched traveling route in the direction that moves away from the route, based on the route and the vicinity. First, map information of an area of the route and the vicinity is transmitted, and map information of an outside doughnut-shaped area adjacent to the area of the route and the vicinity is transmitted. Map information thus cut out to doughnut-shaped areas one after another from the inside to the outside is transmitted.

In the present embodiment, according to instructions from the transmission priority management section 135, the map provision server 110 repeats map data cutout processing, transmission format conversion processing, and transmitting processing for each area from an area of the traveling route and the vicinity toward the outer circumference.

The following describes a transmission order of map data with reference to FIG. 6. In the map provision server 110, first, a route information block 21, which is comprised of traveling route information including guidance information, is transmitted. FIG. 6 shows areas of the third embodiment. Next, the map data of a first area 76 of the route and the vicinity is cut out by the map cutout section 125, and converted into the transmission format by the format conversion section 130. The converted map data (first area map information data block 72) is transmitted via the server communication section 115. Furthermore, the map data of a second area 73 adjacent to the outside of the first area 72 is cut out by the map cutout section 125, and converted into the transmission format by the format conversion section 130. The converted map data (second area map information data block 73) is transmitted via the server communication section 115. These processing are successively performed for blocks of such outward adjacent areas repeatedly up to an outermost circumferential area 79 to transmit N-th area map information block 75. A series of these processing relating to the transmission of route information and the transmission of map data are instructed by the transmission priority management section 135. The area of map data to be cut out is also allocated by the transmission priority management section 135.

Here, the transmission priority management section 135 allocates areas as in other embodiments.

Referring to FIG. 7, the following describes guidance start and map display timings in the third embodiment. First in Step 1, the on-vehicle terminal 210 receives a route information block 21 and the first area map information block 72 of the traveling route and the vicinity. The on-vehicle terminal 210 displays the map of the traveling route and the vicinity by using the received first area map information block 72, and starts the guidance. The on-vehicle terminal 210 displays the map at a 50-m scale, which allows the map to be displayed using the first area map information block 72 with being fitted in a screen size of the terminal display section 230 to hide blanks from view (50-m scale map screen 1400).

In Step 2, upon receiving a second area map information block 73, the on-vehicle terminal 210 uses the received second area map information block 73 and the first area map information block 72 already received in Step 1 so that a map including the first area map information block 72 and the second area map information block 73 can be drawn on the terminal display section 230. Furthermore, the on-vehicle terminal 210 makes it possible for the driver to select a reduced map of up to a 200-m scale using the input section 235 so that the map is displayed using the map data of the first area map information block 72 and the second area map information block with being fitted in a screen size of the terminal display section 230 to hide blanks from view. When the driver selects a 200-m scale by the input section 235, the on-vehicle terminal 210 displays a map of 200-m scale on the terminal display section 230 (200-m scale map screen 1410).

By thus receiving map information of adjacent outer circumferential areas, the on-vehicle terminal 210 makes it possible for the driver to select scales so that maps of the areas fit in a screen size of the terminal display section 230.

In Step 3, the on-vehicle terminal 210 receives N-th area map information block 75 relating to an outermost area. The on-vehicle terminal 210 makes it possible for the driver to select a reduced map of up to a 10-km scale using the input section so that the map is displayed, using the received N-th area map information block 75 and the map information blocks of areas already received within its circumference, with being fitted in a screen size of the terminal display section 230 so as to hide blanks from view. When the driver selects a 10-km scale by the input section, the on-vehicle terminal 210 displays a map of the 10-km scale in the terminal display section 230 (10-km scale map screen 1420). Scales specified by the driver may be not only 10 km but also 5 km, 2 km, 1 km, and 500 m to display maps in more detail. A series of the map display switching processing are instructed by the map display and guidance management section 245.

By thus performing map display and guidance, a map can be displayed upon reception of map of area (the traveling route and the vicinity) acquired earlier without waiting for all map information. Since maps are displayed gradually outward from the vicinity of the route, the driver can use the maps in the course of map data reception. The driver can view the maps without waiting for the acquisition of all map data, and the on-vehicle terminal 210 can quickly start the guidance for the vehicle.

Also in the third embodiment, since the map information is divided into road data and background data, the guidance for vehicle can be started immediately upon the reception of road data of the vicinity of the traveling route as in the first embodiment, without waiting for the reception of all map information. Furthermore, since the road data is divided into freeway data, main road data, and narrow road data, the guidance for vehicle can be started immediately upon the reception of freeway data of the vicinity of a traveling route as in the second embodiment, without waiting for the reception of all road data.

The following describes processing for deciding the range of cutting out a map along a traveling route.

Hereinafter, a description will be made of data stored in amap database 145 of the map provision server 110. Geographical data stored in the map database 145 includes road construction regions such as plains being regions where roads are constructed, and road-not-constructed regions being regions such as rivers and seas where no road is constructed. These geographical data is represented as sets of areas enclosed by line segments represented by a polygon form listing coordinates of starting points and ending points.

Road data stored in the map database 145 includes road position coordinates indicating the positions of roads on a map, road attributes indicating the attributes of roads indicated by the road position coordinates, and intersections where roads indicated by the road position coordinates intersect with each other. Information about roads stored as road attributes includes road types (expressways, trunk roads, regular roads, route numbers, etc.), road size (number of lanes and road width), the numbers of intersections (number of nodes of road link), and traveling charges. The road position coordinates are represented by polylines, which are a set of line segments for which coordinates of starting points and ending points are specified. Each road is drawn on a map by using the position information coordinates of a line segment corresponding to the road and information indicating the width of the road.

The map provision server 110 receives a user's route search request through the on-vehicle terminal 210. The route search request is made in the form of the character string of the address of a destination or the character string of the name of a destination, for example. Next, the map provision server 110 searches for a route from the route search request by using a route search section 1122. The route search section 1122 refers to the map database 145 when searching for a route. The map provision server 110 obtains a route from the starting point to the ending point as a result of the route search.

The following describes about making of a route vicinity map. A route vicinity map to be made by the map provision server 110 is a map showing an example of a route vicinity map, and is a route vicinity map produced by cutting out the route searched for by the user and peripheral geographical features covering the route. The map cutout section 125 of the map provision server 110 refers to the map database 145 from the route obtained by the route search, and makes a peripheral map containing the route. The map cutout section 125 can efficiently make map data by deciding the data amount of the route vicinity map according to the attributes of roads on the route.

The following gives a brief description of the generation of a route vicinity map with reference to FIG. 33. The map cutout section 125 makes a route vicinity map from a starting point till an ending point along an inputted route. The route vicinity map is formed as a set of maps containing proper points of the route. Therefore, the route vicinity map is made by repeating the process of making a map containing proper points on the route and the process of updating the route vicinity map by adding the map containing proper points on the route to the route vicinity map while changing proper points on the route. The making of a route vicinity map will be described below in more detail.

First, the decision of a display range (S2020) will be described. The map cutout section 125 decides proper points on the route except roads contained in the route vicinity map. Next, the map cutout section 125 decides the range of a map to be made, centering on a proper point on the route. When an intersection is contained in the range of the map to be generated, the map cutout section 125 may perform decision processing to expand the range of the map so that, even when the user mistakenly turns the intersection, the user can immediately return to the route.

Hereinafter, decision processing of a display range will be described in more detail with reference to FIG. 33. First, components in the map shown in FIG. 33 are described. Roads shown in FIG. 34 include a guidance route 2101, a trunk road 2102 serving as an intersection road allowing entrance from the guidance route 2101, and a regular road 2103. In FIG. 33, the widths of cutting out maps along the roads include a cutout width 2100 along the route, a cutout width 2104 along the trunk road, and a cutout width 2105 along the regular road.

As shown in FIG. 33, to display a map of the route and the vicinity, the processing of deciding a display range decides an area from which to cut out a map so as to contain the area 2106 of the width 2100, which depends on screen size. A map mesh 2109 covers the cut-out map. Also, maps are cut out along the trunk road and the regular road that intersect with the route. As a result, map meshes 2110 (gray portions in FIG. 34) are cut out. Accordingly, the transmission center sends out map meshes resulting from summing up 2109 and 2110. The cutout width of a map mesh with which to cover roads intersecting with the route is designed to be larger in the trunk road 2101 than in the regular road 2103. This is because deviation of the route to the trunk road often forces unwilling continuation of the traveling because of the difficulty in immediate return to the route regardless of recognition of the route deviation. On the other hand, mistaken entrance to the regular road does not cause so great difficulty in return to the route because immediate U-turn is possible because of less heavy traffic than the trunk road, or the existence of nearby other roads of the same level (road type). Therefore, the regular road intersecting with the route is sufficiently covered with a shorter map mesh than the trunk road. As another method, for the trunk road intersecting with the route, a map is cut out so as to contain places to which the trunk road branches, ignoring the length of cutout width. Though not shown in the drawing, for a trunk road incapable of entrance from the route that straddles the route by an overpass, since route deviation in the place is impossible from common sense, a cutout width of a map mesh does not need to be large. As has been described above, for places where deviation from the route is apt to occur, and places where immediate return to the route after deviation from the route is difficult, a map is cut out farther from an intersection than for regular roads to make it easy to find out a road for return to the route by having a larger width with respect to the route. On the other hand, for places where route deviation is rare or impossible (highways without junction), a map is cut out so that the width of a map mesh with which to cover the route is small, to reduce the amount of map transmission data.

The following describes processing of deciding the range of cutting out a map taking into account the return from a road intersecting with the route. The widths 2104 and 2105 with which maps are cut out along the trunk road or the regular road that intersects with the route is decided based on the width of a map displayed on the screen. To be exact, since the roads curve, the widths are somewhat larger than the width of the screen. When the scale of a map displayed on the screen is reduced to display a map of wider areas, as areas displayed become wider according to reduction in map scale, regular roads are hidden from view and only trunk roads are displayed. Therefore, the width of a map cut out along roads intersecting with regular roads depends on the types of the intersecting roads.

Furthermore, when an actually traveling road deviates from a guidance route because the driver has mistaken a traveling direction at an intersection or has attempted to detour to avoid congestion, a map cutout range may be expanded to contain the roads 2110 eligible as candidates for a return route to enable return to the guidance route. The roads eligible as candidates for a return route refer to a route for returning to the guidance route along trunk roads and regular roads that branch from intersections serving as guidance points and the guidance route, wherein the trunk roads and regular roads have the same level as a road branching from the guidance route. An area covering the route may be decided as a map cutout range. Roads eligible as candidates for a return route are obtained as follow. That is, for roads branching from a guidance route located from a destination by a search algorithm such as Dijkstra method, follow roads of the same level as the branching roads so that the costs of nodes of links corresponding to the roads successively decrease, and select a chain of such links as to again return to the guidance route or the destination. Here, the roads of the same level as the branching roads are followed in order that the return route is displayed at the same scale as at deviation from the route.

Addition of road data (S2040) will be described. The map cutout section 125 refers to the map database 145 and, to map data being generated, adds road data within an area of the map data. The map database 145 may select the roads to be added to the map data being generated according to road attributes. Specifically, since entrance to regular roads from an expressway does not occur without passing through an interchange of the expressway, when a road type being a road attribute of the route is expressway, roads of road types other than expressway may not be added to the map data being generated. As another example, since a vehicle traveling on a road of large road size such as three lanes in one way infrequently enters a road smaller in road size than the traveling road, when a road having a road size of three lanes in one way as a road attribute is included in the route, roads with one lane in one way may not be added to the map data being generated.

Hereinafter, as an example of adding roads to map data being made with road attributes in mind, a description will be made of an example of not adding roads of road types other than expressway to map data being made.

As an example of not adding roads of road types other than expressway to map data being made, as shown in FIG. 34, a navigation client 2 may send the shape data of a route for expressway portions and additionally send lane information and confluence information such as interchanges and junctions instead of sending map mesh data (geographical data used as background, and regular road data) of the expressway portions. In this case, during guiding of the expressway route, no detailed map is displayed in the vicinity of the expressway, the shape of interchange or junction, a lane guide 2303, and a traveling direction are displayed along the route together with a whole route map. With this, even when the distance of the route is elongated, the amount of map data transmitted from the server can be reduced. In this case, since changes in the display screen due to the traveling of the vehicle become small and it is difficult to immediately determine whether the instruments are normally operating, information such as the distances to a next guidance point and the destination, or reach ratio 2304 is successively changed. Such reduction of the map data to be transmitted can also apply to route portions other than the expressway such as regular roads and trunk road to be displayed over a given distance in the vicinity of the route, or sections in which facility data to be displayed does not exist.

With reference to FIG. 8, a detailed description will be made of processing of cutting out a route vicinity map in the map provision server 110 in the embodiments described previously. This example includes the on-vehicle terminal 210 owned by the user, the map provision server 110, and the communication network 300 for connecting them. The on-vehicle terminal 210 includes the input section 235 for the user to input a starting place and a destination, the indicator 230 for displaying map information, the terminal communication section 215 having a communication function, and the position measuring section 240 having a position detection function.

The map provision server 110 includes a route search/guidance information calculation section 120 comprising: a starting place/destination input section 1121 for inputting a starting place and a destination transmitted from the on-vehicle terminal 210; a route search section 1122 for searching for a route between the starting place and the destination; and a map search area setting section 1123 for setting a map search area from map data, and a map cutout section 125: comprising a map element relating data extracting section 1124 for associating map elements and roads; a data amount target value calculating section 1125 for calculating a target value of the amount of data transmitted from the map information providing server 20 to the on-vehicle terminal 210; a data amount reduction rate calculating section 1126 for calculating a target reduction rate of a data amount based on a target value of data amount and a data amount of the map information to be transmitted; a data amount reduction method selecting section 1127 for selecting a method of reducing a data amount of map information based on a target reduction rate of data amount; a data amount reduction execution section 1128 for reducing a data amount of map information to be transmitted by a selected reduction method; and a map database 145 for storing map information.

An example of map data containing route information from a starting place to a destination is described below. However, map information, without being limited to this example, contains various related information.

With reference to FIG. 9, an example of the configuration of the map database 145 is described. The map database 145 of this example includes: a map database table 301; a layer table 302; a road category table 303; a railway category table 304; a field category table 305; and a landmark category table 306.

The map database table 301 stores a lot of map element data, which includes identification number ID, layer number, category number, figure type, figure data, and name. An identification number ID is a four-digit number for identifying a map element. A layer number indicates a category table name of map elements such as road, railway, and field, as described in the layer table 302. A category number indicates the contents of categories as described in different types of category tables 303 to 306. Figure types and figure data will be described with reference to FIG. 10. A name indicates an actual proper noun of a map element.

For example, for a map element to which an identification number 2001 is assigned, the layer number is 200, which indicates railways as described in the layer table 302, and the category is 10, which indicates JR as described in the railway category table 304. The name is "Chuo Line."

With reference to FIG. 10, an example of figure types and figure data of the map database table 301 will be described. Figure types include point, polyline, and polygon. As shown in FIG. 9, a landmark is indicated by a point, a road by a polyline, and a field by a polygon. The figure data of point consists of the coordinates of points, the figure data of polyline consists of the coordinates of both ends and nodes of polyline, and the figure data of polygon consists of a train of the coordinates of the tops of polygons.

With reference to FIG. 11, processing in the map provision server 110 of this example will be described. At the same time, FIG. 8 and FIGS. 12 to 15 will also be referred to. In Step S200, a starting place and a destination that are transmitted from the on-vehicle terminal 210 are inputted. This processing is performed by the starting place and destination input section 1121 of the map provision server 110 shown in FIG. 8.

In Step S201, based on a starting place and a destination D210, a route connecting both is searched for, and a map search area is set. As described below, this processing is performed by the route search section 1122 and the map search area setting section 1123.

With reference to FIG. 12, a description will be made of route search processing in the route search section 1122 and map search area setting processing in the map search area setting section 1123. The route search section 1122 reads map data 510 containing a starting place 511 and a destination 512 from the map database 145, and detects a route 513 connecting both. The route 513 is a set of roads connecting the starting place 511 and the destination 512.

Next, the map search area setting section 1123 finds a circumscribed rectangle of route 513 and defines it as a route area 1514. Furthermore, it adds specified widths vertically and horizontally so as to surround the route area 514, thereby setting a map search area 515. By leaving spaces in surroundings, an appropriate range can be displayed. The route 513 and the map search area 515 are used in Steps S204 and S206 below.

Referring back to FIG. 11, in Step S202, map elements and roads that exist in the map search area 515 are related. As described below, this processing is performed by the map element relating data extracting section 1124. The related map data and route data D211 are outputted to the data reduction processing execution section 1128.

The related map data may be stored in the map database 145. As to the map elements and roads relating processing in Step 202, the result of having performed the processing in advance for all areas of the map database 145 may be stored.

With reference to FIG. 13, a description will be made of a method of relating landmark figures and roads in the map search area 515. Information on landmarks in the map search area 515 is taken out. Since the layer number of landmarks is 400, map element data having a layer number of 400 is extracted. Next, a road having coordinates closest to the coordinates of each landmark figure is extracted. In this way, the identification number IDs of one or more road figures adjacent to each landmark figure are obtained.

In the example shown in the drawing, a landmark of identification number 4004 is a bank because the category is 10. As roads having coordinates closest to the coordinates of this bank, roads of identification numbers of 1003 and 1006 are detected. When roads adjacent to the bank are thus detected, identification numbers 1003 and 1006 are added to the field 601 of "Adjacent road ID" of the bank data of identification number 4004 in map database table 301.

With reference to FIG. 14, a description will be made of a method of relating background figures and roads in the map search area 515. Background figures refer to map elements of comparatively wide or long areas such as railways and fields. By searching for layer numbers of map elements serving as background figures, information on the background figures as shown in the upper portion of FIG. 14 is obtained. A road having coordinates closest to the coordinates of each background figure is extracted. In this way, the identification number IDs of one or more road figures that are adjacent to or intersect with each background figure are obtained.

In the example shown in the drawing, a map element of identification number 3002 is a field because the layer number is 300 and a park because the category is 20. As a road having coordinates closest to the coordinates of this park, roads having identification numbers ID of 1003 and 1006 are detected. When roads adjacent to the park are thus detected, identification numbers 1003 and 1006 are added to the field 701 of "Adjacent road ID" of the park data of identification number 3002 in map database table 301.

Referring back to FIG. 11, in Step S203, a target value of the amount of data to be transmitted to the on-vehicle terminal 210 is calculated. This processing is performed by the data amount target value calculating section 1125. A target value of data amount is obtained by multiplying a communication rate D213 and transmission completion target time D214 set beforehand. The communication rate D213 depends on communication environments and a communication state between the on-vehicle terminal 210 and the map provision server 110.

The communication rate D213 is determined by dividing the amount of data representative of conditions and the like sent during a request from the on-vehicle terminal 210 by the time required until the data arrives at the map provision server 110. Alternatively, the communication rate D213 may be determined by in advance preparing a communication rate table containing execution communication rates by use time zone by region calculated from previous statistics and selecting a pertinent item from the table.

A transmission completion target time, which is time required to complete one transmission of map information, is set to an appropriate time so as not to annoy the user. For example, when a communication rate is 64 kbps and a transmission completion target time is 10 seconds, a target value of the amount of data to be transmitted is 80 kbps. A target value of the amount of data to be transmitted to the on-vehicle terminal 210 may be decided based on the upper limit of user-specified data delivery charges instead of transmission completion target time.

In Step S204, a target reduction rate of data amount is calculated. This processing is performed by the data reduction rate calculating section 1126. A target reduction rate of data amount is obtained by dividing the target value D215 of transmission data amount supplied from the data amount target value calculating section 1125 by the data amount D216 of the map search area 515 supplied from the map search area setting section 1123.

In Step S205, an optimum reduction method is selected based on the calculated data amount target reduction rate D217 and the reduction rate table D218. This processing is performed by the data reduction method selecting section 1127.

An optimum reduction method is to obtain a reduction rate that is greater than and closest to a target reduction rate. For example, when a target value of transmission data amount is 80 Kbyte, a data amount after reduction processing must be less than and closest to 80 Kbyte. One or plural reduction methods may be selected.

The data amount reduction method selecting section 1127 sequences optimum reduction methods, when plural, and outputs them to the data amount reduction processing execution section 1128 as execution command data D220. When road/background/landmark selection processing is included in the selected reduction method, the execution command data D220 is specified so as to first perform the processing. This is because the road/background/landmark selection processing has a great reduction effect because it selectively omits the very figure elements, while linearizing processing and other processing generally have a small reduction rate and are suitable for fine adjustments because they only selectively omit figure components.

The structure of a reduction rate table will be described with reference to FIG. 15. As shown in the drawing, plural reduction methods and reduction rates are displayed in the reduction rate table 803. In the case of road figure selection, different reduction rates are obtained depending on parameter sets.

The reduction rate table is prepared in advance by implementing reduction methods at plural locations of map data used and finding the averages of reduction rates obtained by the methods. Or, since reduction rates are expected to be different depending on regions used even when map data is identical, for example, to differentiate between urban areas and suburban areas, it is effective to define a reduction rate for each density of road data, calculate the density of road data of map data used during reference to a reduction rate table, and selectively use a closest reduction rate.

Maintenance and updating of a reduction rate table once prepared is expected to increase in precision by reflecting reduction rates obtained when reduction methods are actually executed, in the reduction rate table by statistical processing. That is, in the data amount reduction processing of Step S206 described below, the data of the reduction rate table D218 may be updated using actual reduction rates obtained when reduction methods are executed. These reduction methods will be described in detail later.

Referring back to FIG. 11, In Step S206, data amount reduction processing is performed. This processing is performed by the data amount reduction processing execution section 1128. The data amount reduction processing execution section 1128 uses an optimum data reduction method obtained by Step S205 and generates transmission map data from the route data obtained in Step S201 and map search area data D211. The operation of the data amount reduction processing execution section 1128 will be described in detail later. The transmission map data D219 obtained by the data amount reduction processing execution section 1128 is transmitted to the on-vehicle terminal 216.

In this example, since the map information to be transmitted does not exceed the target value of transmission data amount, it is transmitted to the on-vehicle terminal 210 within target time. As a result, the user will not be annoyed by the length of transmission wait time.

With reference to FIG. 16, a detailed description will be made of data amount reduction processing in the data amount reduction execution section 1128. The data amount reduction execution section 1128 includes a road figure selecting section 911, a background figure selection section 912, a landmark figure selecting section 913, a first polyline figure linearizing section 921, a second polyline figure linearizing section 922, a polyline figure merging section 923, a polygon figure simplifying section 924, a first map data divided transmission section 931, a second map data dividing transmission section 932, and a selection control adjustment processing section 950.

Of the data amount reduction processing 911 to 932, processing described in the execution command data 220 are sequentially performed for the map data D211.

Map data before execution of the processing is saved, and when the map data after execution of the processing is reduced beyond the target reduction rate, the map data saved in advance is restored by the selection control adjustment processing section 950. Then, reduction processing smaller in reduction rate than the reduction processing described above is selected from the reduction rate table, and performed.

On the other hand, even after all the reduction processing described in the execution command data D220 have been terminated, when the target reduction rate has not been achieved, reduction processing other than the processing described in the execution command data D220 is selected and performed. As reduction processing in this case, appropriate reduction processing is decided by referring to the reduction rate table, based on the amount of the map data at the time when the processing described in the execution command data D220 have been terminated.

With this, even when the amount of the map data after actual reduction processing becomes smaller or larger than an initial target map data amount, reduction processing can be appropriately reselected, so that the target reduction rate can be achieved. The following describes in detail the individual reduction processing.

The operation of the road figure selecting section 911 will be described with reference to FIGS. 17, 18, and 19. Priorities are assigned to roads in a map search area 515. In Step S1001, priority p1 is assigned to a route road. In Step S1002, priority p2 is assigned to main roads. In Step S1003, priority p3 is assigned to route minor roads. In Step S1004, priority p4 is assigned to named roads. In Step S1005, priority p5 is assigned to straight connection roads of route minor roads. The following relation is satisfied among the levels of the priorities assigned in Steps S1001 to S1005:

$$p1>p2>p3>p4>p5$$

As shown in FIG. 18, the assigned priorities are entered in a priority field 1010 of a road data table. When priorities have already been set in the priority field of the road data table, the set values are used, and only when the set values are changed to higher priorities, the set values may be rewritten.

In the assignment of priorities to roads, according to map data used and the number of types included in the map data, conditions of defining priority and the order of priority may be changed.

The operation of the road figure selecting section 911 will be described with reference to FIG. 19. Roads in the map search area 515 are extracted in the order of the priorities assigned to the roads in this example. FIG. 19A designates the map search area 515, FIG. 19B designates a route 513. FIG. 19C designates the map of the route 513 and minor roads that are extracted from the map search area 515. FIG. 19D designates the map of the route 513, main roads, and minor roads that are extracted from the map search area 515. FIG. 19E designates the map of the route 513, the main roads, the minor roads, and straight connection roads to route minor roads that are extracted from the map search area 515.

Thus, in this example, since road information data extracted from the map search area 515 is transmitted, the amount of data to be transmitted to the user can be reduced.

The operation of the background figure selecting section 912 will be described with reference to FIG. 20. First, priorities are assigned to background figures in the map search area 515. As the priorities of the background figures, the priorities of adjacent roads are used.

In Step S1301, the identification number ID and the priority of a road figure selected by the road figure selecting section 911 are read. In Step S1302, background figure data having the identification number ID of the road figure read in Step S1301 that is described in the "adjacent road ID" field of background figure data as shown FIG. 14 is extracted from the map database table. In Step 1303, the priority of the road described in the adjacent road ID field is entered into the priority field of background figure data.

For example, when the identification number of a road map figure selected by the road figure selecting section 911 is 1003, its priority is p3 as shown in FIG. 18. On the other hand, background figure data having the identification number 1003 that is described in the adjacent road ID field is Green Park, whose identification number is 3002, as shown in FIG. 14. Therefore, the priority of Green Park is assigned p3, which is the same as the priority of the road having the identification number 1003.

When priorities have been assigned to background figures, next, according to the priorities, background figures are extracted from the map search area 515 and are added to the above-mentioned road information data. Thus, as the transmission data, map information in which the background figures are added to the road information is generated.

The operation of the landmark figure selecting section 913 will be described with reference to FIG. 21. First, priorities are assigned to landmark figures. As the priorities of the landmark figures, the priorities of adjacent roads are used.

In Step 1401, the identification number ID and the priority of the road figure selected by the road figure selecting section 911 are read. In Step 1402, landmark figure data having the identification number ID of the road figure read in Step S1401 that is described in the adjacent road ID field of the landmark figure data as shown FIG. 14 is extracted from the map database table. In Step 1403, the priority of the road described in the adjacent road ID field is entered into the priority field of landmark figure data.

When priorities have been assigned to landmark figures, next, according to the priorities, landmark figures are extracted from the map search area 515 and are added to the above-mentioned road information data. Thus, as the transmission data, map information in which the landmark figures are added to the road information is generated.

In FIGS. 19C, 19D and 19E, map data is shown to which the road figures selected by the road figure selecting section 911, the background figures selected by the background figure selecting section 912, and the landmark figures selected by the landmark figure selecting section 913 are added.

By adding background figures and landmark figures to road data, the visibility of the map data increases, and the user can easily recognize a starting place, current location, or a destination.

Although, in this example, the case of adding background figures or landmark figures to road data is described, other related information may also be added within a target value of data amount.

The operation of the first polyline figure linearizing section 921 will be described with reference to FIG. 22. In the polyline figure linearizing section 921 of this example, linear figures such as roads and railways are shown by polylines, and the polylines are approximated by lines, whereby the data amount map information data is reduced. Here, the linearizing of a road will be described as an example. The road is recognized as a polyline with intersections or dead end points as both ends.

As shown FIG. 22A, tilt angles θ1 and θ2 of polyline segments w1 and w2 with respect to an X axis are obtained to detect linearity by obtaining a deflection between the adjacent tilt angles. Based on the result of this processing, groups of polyline segments are classified as dotted line, broken line, and one-dot line in descending order of linearity, as shown in FIG. 22B. Finally, as shown in FIG. 22C, the polyline segments of the groups are linearly connected.

The operation of the second polyline figure linearizing section 922 will be described with reference to FIG. 23. FIG. 23A shows a starting point S, an ending point G, and nodes of a road. As shown in FIG. 23B, a straight line that connects the starting point S and the ending point G are drawn, and its length is defined as L1. Perpendiculars are drawn from the nodes to the straight line, and length of the longest perpendicular is defined as d1max. Whether the following evaluation expressions are satisfied is determined:

$$F1 = d1max/L1 < e1$$

$$F2 = d1max < e2.$$

e1 and e2 are evaluation functions. A first evaluation function e1 gives a threshold of the ratio between the length of the longest perpendicular and the distance between the starting point and the ending point, and is used to perform thinning processing that doesn't depend on scales. Accordingly, the first evaluation function e1 gives an identical value as long as the shape of a polyline is identical, even when scales are different. A second evaluation function e2 gives a threshold of the length of the longest perpendicular and provides effective thinning processing when a scale range (maximum enlargement rate) is decided. This function is effective to eliminate minute projections and depressions.

When the evaluation expressions are satisfied, the polyline is replaced by the straight line SG, and the processing is terminated. When the evaluation expressions are not satisfied, as shown in FIG. 23C, a straight line between a node P1 forming the longest perpendicular and the starting point S, and a straight line between the node P1 and the ending point G are drawn, lines perpendicular to the two straight lines are drawn from the individual nodes, and the longest perpendiculars are assumed to be d2max and d3max, respectively. It is determined again whether the two evaluation expressions are satisfied for the two portions. When the evaluation expressions are satisfied, the nodes are deleted and the polyline segments are replaced by the straight lines. In the example of FIG. 21C, it is assumed that the evaluation expressions are not satisfied for the longer polyline segment, but the evaluation expressions are satisfied for the shorter polyline segment. Therefore, for the shorter polyline segment, the nodes are deleted and replaced by the straight line. For the longer polyline segment, as shown in FIG. 23D, a straight line between a node P2 forming the longest perpendicular and the starting point S, and a straight line between the node P2 and the node P1 are drawn, and the same processing is performed for the two polyline segments. When the evaluation expressions are satisfied, as shown in FIG. 23E, the nodes are deleted and the polyline segments are replaced by the straight lines. As apparent from the comparison between FIGS. 2 3A and 23E, according to this example, a polyline having a large number of nodes is replaced by a polyline having fewer nodes.

Thus, according to this example, since roads of complicated shapes are replaced by roads of simple shapes, the data amount of map information decreases. With reference to FIGS. 24 and 25, a description will be made of an example of the operation of a polyline figure integrating section 923. The polyline figure integrating section 923 of this example reduces the data amount of map information by replacing two polyline figures by one polyline figure. In Step 1701, the distance between two polyline figures is found. From pairs of line segments extracted from each of two polylines, pairs of two line segments which form an angle smaller than a predetermined angle and are opposite to each other are detected. With reference to FIG. 25, a description is made of conditions that two line segments PIP2 and QIQ2 are opposite to each other. A first condition is that, as shown in FIG. 25A, a foot N1 of a perpendicular from the middle point M of one line segment P1P2 is on another line segment Q1Q2. A second condition is that, as shown in FIG. 25B, a foot N2 of a perpendicular from the starting point P1 or ending point P2 of the line segment P1P2 is on the line segment Q1Q2.

Assume that the length of the perpendicular MN1 is H1 in FIG. 25A, and the length of the perpendicular P1N2 is H2 in FIG. 25B. For the two polylines, the lengths H1 and H2 of perpendiculars are found for all line segments satisfying the above-mentioned conditions. The maximum value of all the lengths of perpendiculars thus found is determined as the distance between the two polyline figures.

Referring back to FIG. 24, in Step 1702, a set of adjacent polyline figures is found. Pairs of two polyline figures the distance between which is smaller than a predetermined value are extracted and successively grouped. In Step 1703, plural polyline figures are integrated. When pairs of adjacent polyline figures are grouped in Step 1702, overlapping portions occur. Therefore, two adjacent polyline figures are replaced by one polyline figure.

For example, from among line segments of two polyline figures, pairs of line segments satisfying the above-mentioned two conditions are detected, and a polyline figure comprising line segments connecting their middle points is generated. Or, when one of two adjacent polyline figures is a main road and the other is an auxiliary road, the auxiliary road may be integrated into the main road. Or narrow roads maybe integrated into broad roads. By thus integrating two adjacent roads one after another, roads are reduced and a map information data amount is reduced.

With reference to FIG. 26, an example of the operation of the polygonal figure simplifying section 924 is described. Landmarks such as buildings and parks are displayed as polygonal figures. In this example, the data amount of map information is reduced by replacing polygons by simpler figures. First, feature quantities of the vertexes of a polygon are found.

A method of finding feature quantities of vertex P1 is described. From the vertex P1, a perpendicular is drawn to a line P1P8 connecting vertexes P2 and P3 at both sides of the vertex P1, and the length d1 of the perpendicular is assumed to be a feature quantity of the vertex P1.

Feature quantities of all vertexes of the polygon are found, and vertexes having feature quantities smaller than a predetermined threshold are deleted.

FIG. 26A shows a procedure for finding feature quantities d1, d3, d5, and d7 of the vertexes P1, P3, P5, and P7 of an octagon. FIG. 26B shows a procedure for finding feature quantities d2, d4, d6, and d8 of the vertexes P2, P4, P6, and P8 of the octagon. For example, in the example of FIG. 26, the vertex P4 is deleted from the octagon of FIG. 26, determining that the feature quantity d4 of the vertex P4 is smaller than the threshold. Furthermore, when the feature quantity d5 of the vertex P5 is smaller than the threshold, the vertex P5 may be deleted from the polygon of FIG. 26.

Thus, in this example, since polygons are replaced by simpler shapes, the data amount of map information is reduced.

With reference to FIG. 27, an example of the operation of a first map data dividing transmission section 931 is described. Conventionally, as shown in FIG. 27A, the first map data dividing transmission section 931 has transmitted all map data including a starting place and a destination transmitted from the user. When transmitting a route from the starting place to the destination instead of the map data, the first map data dividing transmission section 931 has transmitted the whole route at a time. In this example, as shown in FIG. 27B, the first map data dividing transmission section 931 divides the data to be transmitted into several segments from the starting place to the destination and transmits them in order. First, the first map data dividing transmission section 931 transmits a starting place vicinity region 2001 including the starting place. Next, it transmits route guidance information on the route from the starting place to the destination. The route guidance information may cover the whole route from the starting place to the destination, but may cover any one of several divisional segments of the route. When the route is divided, a route portion indicating user's existence position is transmitted.

Thus, in this example, since the route information is divided to be transmitted, a data amount in one transmission can be reduced.

With reference to FIG. 28, the operation of a second map data dividing transmission section 932 is described. In this example, route information including expressways is transmitted. First, the second map data dividing transmission section 932 transmits route guidance information 2102 from a starting place 511 to an entrance 2101 of an expressway. Next, it transmits route information 513 of the expressway. The route information may be transmitted as a whole or sectionially. Finally, it transmits route guidance information 2104 of up to a destination 512 including an exit 2103 of the expressway.

Thus, in this example, since the route information is divided to be transmitted, the amount of data to be transmitted can be reduced.

In the above-mentioned example, a description was made of an example of transmitting route information as amap information, based on starting place and destination information transmitted from the user. However, it is also possible to transmit map information other than the route information according to user requests.

In the above-mentioned embodiment, blocks of the map data to be transmitted is determined based on transmission data amounts. However, the map data may be divided for each of map meshes covering a cut-out range of a map along the route (route vicinity map) and the divided segments of the map data may be transmitted in order along the route.

As described previously, when maps cut out along the guidance route are downloaded after being divided at plural points on the route, the maps cannot be obtained stably outside zones where communication devices such as cellular phones are capable of communications or in zones where communication failures occur frequently. By managing maps downloaded to the on-vehicle terminal by number in units of meshes, the on-vehicle terminal can easily determine whether the maps have been downloaded (stored), and can avoid duplicately downloading a map of the same place by downloading only portions not stored from the server. In short, the maps can be easily re-used. However, when the vehicle is guided along the route, maps have only to have a certain distance width from the route. In such a case, in a mesh in which only slight portion of the route is included, a portion in which portions exceeding the certain width exist may also be downloaded, resulting in useless maps being also downloaded.

On the other hand, although maps of useless portions are not transmitted because maps having a certain distance width from the route are cut out and transmitted, since reuse of maps is not taken into consideration, maps of places through which the vehicle passed previously must also be downloaded each time.

The following describes processing in the case where maps cut out along a guidance route are re-used in the on-vehicle terminal.

As a result of a route search request to the map provision server 110, route link information being information about a route is transmitted from the map provision server 110 as a search result. At this time, the map provision server 11 can transmit together a whole route display map for displaying the whole route, as information about a route searched for. Upon receiving it through the terminal communication section 215, the map data storage/management section 225 stores the whole route display map having been transmitted along with the route link information. On the other hand, a request generating section not shown in the drawing, in response to the selection decision input from the user, requests the map provision server 110 to transmit a route vicinity map used to guide the route. Map data transmitted from the map provision server 110 in response to the route vicinity map request is stored as a route vicinity map in the map data storage/management section 225, and a map management table 1014 and a route information management table that manage the map data having been sent and link information of a route corresponding to it are updated.

The map cutout section 125, in response to a request from the on-vehicle terminal 210, cuts out a route vicinity map so as to cover the searched route. The route vicinity map is cut out so as to encompass the route as shown in FIG. 2. A route vicinity eligible for map cutout refers to a range contained within a predetermined distance in a vertical direction from the route.

In map information stored in the map database 145, an identification number is assigned, as a link ID (road ID), to each of roads between intersections. These link IDs will be referred to as LINK001 to LINK061, for example. As a result, a train of assigned link IDs are uniquely associated with roads making up a route obtained by route search. A link train ID is a number assigned to a group of plural link IDs. Here, for convenience of description, a link train ID will be referred to as LL001, for example. Specifically, a link train ID is assigned to a group of link IDs assigned to roads between intersections of main roads, between sections of same types of roads such as national roads, prefecture roads, and city roads, or sections of identical road numbers of national roads and prefecture roads. Therefore, roads that the vehicle has already traveled can be identified roughly by link train IDs and in more detail by link IDs.

FIG. 29 shows an example of a data format used during downloading of map data and route data that are cut out by the map cutout section 125 in the on-vehicle terminal 210. Route data concerning a recommended route obtained in response to a route search request from the on-vehicle terminal 210 includes a route ID for identifying the route and a transmission data size of the route data, followed by a train of a mesh ID (mesh code of a map mesh) and link train IDs of the route contained in the mesh, in the order of meshes of a map through which the route passes. In route link train data of each mesh, identified by a mesh ID, link trains of the route contained in the map mesh are stored in order in a direction from the starting point to the destination of the route. When identical link trains pass through plural meshes, a same link train ID is recorded in each of the meshes. Thereby, data of link train IDs of the route is arranged in order in the direction from the starting point to the destination of the route.

When the map data of a route vicinity map is divided into meshes for management, the map data includes a route ID for identifying a route and a transmission data size of the map data, followed by a train of map data divided into meshes. Map data of each mesh includes a mesh ID for identifying the mesh, road data, background data, and name data. A mesh ID includes mesh code of the mesh. Road data includes a road link number, coordinate data representative of a road shape corresponding to the link number, regulation data such as one-way traffic, and road connection information for performing map matching and route search. The route search data is also transmitted in order that the on-vehicle terminal 210 uses it when searching for a route for returning to an initial recommended route by itself when the traveling vehicle deviates for some reason from the recommended route used for route guiding. The background data, which is data for performing geometrical display other than roads, is geographical features such as ponds and rivers, and area shapes of various facilities such as parks. The name data is the name data of roads, facilities, place names, and the like. When all map data is transmitted, the map data in the vicinity of the route up to the destination is arranged in units of meshes, as shown in FIG. 29.

FIG. 30 shows an example of a map management table. To manage map data downloaded from the map provision server 110, the on-vehicle terminal 210 prepares the map management table 1014. The map management table 1014 includes a table for meshes and a mesh data table. The table for meshes manages by route ID the correspondences between link train IDs (hereinafter referred to as route link train IDs) of link trains belonging to a route and map meshes in the vicinity of the link trains. The mesh data table manages the correspondences between mesh data stored in a memory card and mesh IDs.

The table for meshes stores route link train IDs and mesh IDs of maps in the vicinity of the route link train IDs, the mesh IDs being associated with each of the route link train IDs. Here, the route link train IDs is obtained by examining route link train data downloaded from a navigation server and obtaining route link trains contained in a mesh for each mesh. When a mesh of a map corresponding to a peripheral area of a link train differs from a mesh through which the link train passes, to determine to which route link train a map mesh through which the route does not pass corresponds, by checking link IDs and link train IDs contained in road data of each mesh transmitted as map data and obtaining coordinates corresponding to a peripheral area of each link from the coordinate information, mesh code of mesh corresponding to the peripheral area can be obtained from the coordinate value. By using the map management table, it can be determined in which map mesh a peripheral area of each link train in a certain route is contained.

The mesh data table is a table for managing by mesh ID the names of mesh data being actual map data. However, since mesh data is map data obtained by cutting out a peripheral area of a route, when a route ID is different even when a mesh ID is the same, the mesh data is managed as different mesh data. Therefore, mesh data names are managed by combinations of mesh ID and route ID. Even in the case of a different route ID for a same mesh ID, since same mesh data may be used, whether mesh data contained in a map mesh of the same mesh ID is shared by respective route IDs is determined by whether route link train IDs corresponding to a peripheral area of the mesh ID are all the same. Therefore, the mesh data file manages the correspondences between mesh IDs and IDs of route link trains corresponding to the mesh IDs, in contrast to the table for meshes. In the case of the example shown in FIG. 6, for mesh IDs of A4, B4, ... , B2, since all corresponding route link trains are the same in any of routes having a route ID of 1 or 2, same mesh data is used. On the other hand, for mesh ID of C2, since route link train LL064 contained in the route having a route ID of 2 is not contained in the route having a route ID of 1, different mesh data is used.

In the case of cutting out a route vicinity map of a route to the destination that is different from a route on which the vehicle has already traveled, when route link train data is received to update the map management table, of the map data of a route vicinity map corresponding to the route, only the map data of different route portions has to be downloaded.

FIG. 31 shows an example of transmitting map data not transmitted when a route vicinity map is cut out. Although map data does not need to be transmitted for a route portion from the starting point to points in which the map data has been already transmitted, route link train data of all route link trains is transmitted as route information. Upon receiving the route link train data, the on-vehicle terminal 210 prepares the table for meshes, and obtains mesh IDs of a corresponding peripheral region for each of the route link trains. In turn, the on-vehicle terminal 210 obtains corresponding route link train IDs for each of the mesh IDs and detects mesh IDs not contained in map meshes already downloaded, referring to the mesh data table. In the example shown in FIG. 9, for portions having mesh IDs of C2 andD2, since the link train IDs are different from route link train IDs downloaded previously, a new map is required in the vicinity of the link trains. Accordingly, the on-vehicle terminal 210 requests the map provision server 110 to download mesh data corresponding to mesh IDs in the vicinity of the link trains. In response to this request, the map provision server 110 transmits map dada including road data, background data, name data, and the like only for portions having mesh IDs of C2 and D2. By doing so, only map data not stored in the on-vehicle terminal 210 is transmitted, and in duplicate mesh portions, only route information such as route link strings is transmitted and map data is not transmitted. As a result, the amount of transmission data can be reduced.

When a map of return route is transmitted, since map data has been transmitted during outward route traveling, new map data is not required when the vehicle travels on the same route, and only data on the route has to be transmitted. Therefore, when a return route is different from an outward route, like the above-mentioned example, only map data not yet downloaded is required correspondingly to new links, the amount of transmission data can be reduced similarly.

When the on-vehicle terminal 210 provides a screen information storage section for storing display specification information such as a screen size of display 41, the map provision server 110 can refer to it to determine the format of map data to be transmitted. The screen size information of the terminal display section 230 stored in this screen information storage section is transmitted to the map provision server 110 during connection with the map provision server 110 when the on-vehicle terminal 210 is used.

When a whole route map accommodating to the on-vehicle terminal is generated, when the screen size of the on-vehicle terminal 210 is larger than that of a predetermined drawing size (640x480 dots, for example), the whole route map is generated as a vector map. When the screen is smaller (320×240 dots, for example), the whole route map is generated as a raster map. This is because when the screen is smaller, when information of map elements to be drawn is transmitted, the data amount of a raster map expanded in advance to pixel data is smaller than that of vector data, while, when the screen is larger, a vector map transmitted as vector data for each of map elements is smaller in data amount than a raster map all pixel data is transmitted. Therefore, the map provision server 110 can know the screen size of the on-vehicle terminal 210 by any of the following methods: (1) the on-vehicle terminal 210 adds screen size information when transmitting a route search request, and (2) the map provision server 110 manages information indicating features/specifications of each on-vehicle terminal in advance, and determines an on-vehicle terminal eligible for transmission by checking the ID of the on-vehicle terminal 210 when communicating with it.

By transmitting the whole route map while changing data formats according to the screen size of the on-vehicle terminal 210 as described above, maps can be transmitted without redundancy, taking the screen size of the on-vehicle terminal into account, and the whole route map can be transmitted to the on-vehicle terminal with a minimum amount of data.

In this example, the mesh IDs of map meshes required in the on-vehicle terminal 210 are obtained by the map provision server 110. Therefore, since the mesh IDs do not need to be transmitted from the on-vehicle terminal 210 to the map provision server 110, reduction in communication data amounts, improvement in response, and lower communication charges can be achieved along with less processing in the on-vehicle terminal 210, resulting in increased operability of the on-vehicle terminal.

According to this construction, since maps downloaded once can be effectively re-used by the navigation device, reduction in communication costs and improvement in response can be achieved. A communication type navigation system can be realized which cuts out, without omitting information useful for user's traveling, route vicinity maps with data amounts effectively reduced along a route by the server and transmits them to the on-vehicle terminal, and yet enables reuse of maps of route portions through which the vehicle passed previously. Since the data amount of map data has been reduced, the on-vehicle terminal being a navigation client can reduce an area for storing the map data. Moreover, reduced communication data amounts contribute to reduction in communication charges.

INDUSTRIAL APPLICABILITY

According to the present invention, in the car navigation system, route vicinity maps generated by the navigation server can be effectively transmitted to users. Even when the data amount of map information is reduced, the map provision server maintains the features and visibility of the map information. Accordingly, the users can obtain desired information from the map information. As a result, the users can benefit from improved responsibility in use of map data without heavily losing convenience, and significant reduction in time from the selection of a destination to the start of guiding in the communication type navigation system.

**Claims**

1. A method for transmitting map data in a communication type navigation system, wherein a center server for transmitting the map data in the system executes the steps of:

   receiving information of a current location and a destination from an on-vehicle terminal;
   searching for a traveling route between the current location to be a starting place and the destination based on those information, and making guidance information on the searched traveling route; and
   when transmitting traveling route information including the traveling route or the guidance information and plural map information blocks into which map information on the traveling route is divided, placing the map information blocks in the order of priority for transmission, and transmitting the map information blocks according to the order of priority.

2. The method for transmitting map data according to claim 1,
   wherein the map information blocks are divided depending on the searched traveling route,
   as for the order of priority for transmitting the map information blocks, a high priority is given to a map information block in the vicinity of the starting place and a low priority is given to a block in the vicinity of the destination,
   the order of priority for transmitting the traveling route information is set equal to or higher than that of the map information blocks in the vicinity of the starting place, and
   the map information blocks are transmitted in order of priority for transmission.

3. A method for transmitting map data in a communication type navigation system, wherein a center server for transmitting the map data in the system executes the steps of:

receiving information of a current location and a destination from an on-vehicle terminal;

searching for a traveling route between the current location to be a starting place and the destination based on those information, and making guidance information on the searched traveling route; and

when transmitting traveling route information including the traveling route or the guidance information and plural map information blocks into which map information on the traveling route is divided based on distances from the traveling route, placing the map information blocks in the order of priority for transmission, and transmitting the map information blocks according to the order of priority.

4. The method for transmitting map data according to claim 3,

wherein the map information blocks are divided along the shape of the searched traveling route and according to distances from the searched traveling route,

as for the order of priority for transmitting the map information blocks, the highest priority order is given to the nearest map information from the traveling route, and the others are set lower as their distances from the traveling route increase,

the order of priority for transmitting the traveling route information is set equal to or higher than that of the map information blocks in the vicinity of the starting place, and

the map information blocks are transmitted according to the order of priority for transmission.

5. The method for transmitting map data according to claim 1,

wherein the map information blocks are further divided into road data blocks containing information relating to roads in map information, and background data blocks containing name data such as place names and landmark names in the map information or background data such as rivers, seas, golf courses, and airports in the map information, and

the order of priority for transmitting the road data blocks is higher than that of the background data blocks.

6. The method for transmitting map data according to claim 5,

wherein the road data blocks are further divided into freeway data blocks containing information on freeways, main road data blocks containing information on main roads other than freeways, and narrow road data blocks containing information on narrow roads such as roads of residential zones,

the transmission priorities of respective data blocks in an identical map information block are ranked in order of the freeway data blocks, the main road data blocks, the narrow road data blocks, and the name data blocks, and

the map information blocks are transmitted according to the order of priority for transmission.

7. An on-vehicle terminal in a communication type navigation system, comprising the functions of:

transmitting information of a current location and a destination to a map data provision center server;

receiving information of the traveling route searched for by the center server based on information of the current location and the destination, and plural map information blocks from the center server, wherein the traveling route is a route between the current location to be a starting place and the destination, and plural map information blocks are blocks into which map information on the traveling route is divided along the traveling route;

upon receiving the traveling route information, starting navigation that instructs a guidance direction to a next guidance point, a road name relating to the next guidance point, an intersection name relating to the next guidance point, a point name relating to the next guidance point, a distance of up to the next guidance point, or a distance of up to a destination, with a display or a voice.

8. An on-vehicle terminal in a communication type navigation system, executing the functions of:

transmitting information of a current location and a destination to a map data provision center server;

receiving information of a traveling route searched for by the center server based on information of the current location and the destination, wherein the traveling route is a route between the current location to be a starting place and the destination;

receiving a map information block in the vicinity of the starting place earlier than other map information blocks; and

upon receiving the traveling route information and the map information blocks in the vicinity of the starting place, displaying a map on screen in the vicinity of the starting place to start navigation.

9. The on-vehicle terminal according to claim 8, wherein the map information blocks received by the on-vehicle terminal are classified into road data blocks containing information relating to roads in map information, and background data blocks containing name data such as place names and landmark names in the map information or background data such as rivers, seas, golf courses and airports in the map information,

the on-vehicle terminal receives a road data block in the vicinity of the starting place earlier than other data blocks, and upon receiving the road data block in the vicinity of the starting place, displays on screen a map on which roads and a route portion in the vicinity of the starting are drawn, to start navigation.

10. The on-vehicle terminal according to claim 9, wherein the on-vehicle terminal receives the background data blocks after receiving the road data blocks, and upon receiving the background data blocks, superimposes and displays background data on a road map already displayed on screen.

11. The on-vehicle terminal according to claim 9, wherein the on-vehicle terminal receives main road data blocks or narrow road data blocks after receiving freeway data blocks, and upon receiving the main road data blocks, superimposes and displays main road data on a displayed map; and upon receiving the narrow road data blocks, further superimposes and displays narrow road data.

12. The on-vehicle terminal according to claim 9, wherein the on-vehicle terminal executes the functions of:

determining whether a map data block in the vicinity of the vehicle position have been received, and traveling route information with guidance information has been received, when the traveling route information with guidance information has been received, and the map data block in the vicinity of the vehicle position have not been received, turning on the mode of performing guiding by using only the traveling route information with guidance infromattion, and when the traveling route information with guidance information has been received, and the map data blocks in the vicinity of the vehicle position have been received, turning on the mode of performing guiding while displaying map data in the vicinity of the vehicle position.

# FIG. 1

MAP PROVISION
CENTER

100

VEHICLE

200

| 110 | 300 | 210 |
|---|---|---|

MAP PROVISION
SERVER

MOBILE
PHONE
NETWORK

ON-VEHICLE TERMINAL

115 — SERVER COMMUNI-
CATION SECTION

120 — ROUTE SEARCH AND
GUIDANCE INFORMATION
CALCULATION SECTION

125 — MAP CUTOUT SECTION

130 — TRANSMISSION FORMAT
CONVERSION SECTION

135 — TRANSMISSION PRIORITY
MANAGEMENT SECTION

140 — SERVER CONTROL
SECTION

145 — MAP DATABASE

TERMINAL COMMUNI-
CATION SECTION — 215

TRANSMISSION FORMAT
RESTORATION SECTION — 220

MAP DATA STORAGE
AND MANAGEMENT
SECTION — 225

TERMINAL DISPLAY
SECTION — 230

INPUT SECTION — 235

POSITION MEASURING
SECTION — 240

MAP DISPLAY AND
GUIDANCE MANAGE-
MENT SECTION — 245

TERMINAL CONTROL
SECTION — 250

FIG. 2

# FIG. 3

STEP 1 : A ROUTE INFORMATION BLOCK IS RECEIVED

TRANSMITTING DATA

GUIDANCE SCREEN

ROUTE
INFOR-
MATION
BLOCK

21

RUN AHEAD 100m
AND TURN LEFT AT
XX INTERSECTION

TBT GUIDANCE — 1000

GUIDING IS PERFORMED USING TRAVELING ROUTE INFORMATION INCLUDING GUIDANCE INFORMATION

STEP 2 : A FIRST AREA BLOCK IS RECEIVED

TRANSMITTING DATA

MAP DISPLAY — 1010

ROUTE
INFOR-
MATION
BLOCK

FIRST
AREA MAP
INFOR-
MATION
BLOCK

21            22

B POND          A PARK

X SHOP

Y SHOP          Z SHOP

MAP DATA OF FIRST AREA BLOCK IS DISPLAYED ON THE SCREEN AS A MAP FOR GUIDING

## FIG. 4

ROAD DATA (FIRST AREA)

BACKGROUND DATA (FIRST AREA)

ROAD DATA (SECOND AREA)

BACKGROUND DATA (SECOND AREA)

ROAD DATA (N-TH AREA)

BACKGROUND DATA (N-TH AREA)

B POND · A PARK · X SHOP · Y SHOP · Z SHOP

E CO. · D CO. · E SHOP · G SHOP

L SHOP · G PARK · K SHOP · J SHOP

45A · 45B · 46A · 46B · 47A · 47B

TRANSMITTING DATA

20

START

| ROUTE INFOR-MATION BLOCK | FIRST AREA ROAD DATA BLOCK | FIRST AREA BACK-GROUND DATA BLOCK | SECOND AREA ROAD DATA BLOCK | SECOND AREA BACK-GROUND DATA BLOCK | - - - - - - - | N-TH AREA ROAD DATA BLOCK | N-TH AREA BACK-GROUND DATA BLOCK |

END

21 · 22A · 22B · 23A · 23B · 25A · 25B

EP 1 555 511 A1

FIG. 5

FREEWAY
(FIRST AREA)

MAIN ROAD
(FIRST AREA)

NARROW ROAD
(FIRST AREA)

FREEWAY
(N-TH AREA)

MAIN ROAD
(N-TH AREA)

NARROW ROAD
(N-TH AREA)

62A          62B          62C                    65A          65B          65C

TRANSMITTING DATA

20

START

| ROUTE INFOR- MATION BLOCK | FIRST AREA FREEWAY DATA BLOCK | FIRST AREA MAIN ROAD DATA BLOCK | FIRST AREA NARROW ROAD DATA BLOCK | FIRST AREA BACK- GROUND DATA BLOCK | ----- | N-TH AREA FREEWAY DATA BLOCK | N-TH AREA MAIN ROAD DATA BLOCK | N-TH AREA NARROW ROAD DATA BLOCK | N-TH AREA BACK- GROUND DATA BLOCK |

END

21     22AA    22AB    22AC    22B            25AA    25AB    25AC    25B

EP 1 555 511 A1

## FIG. 6

TRANSMITTING DATA

START

| ROUTE INFOR- MATION BLOCK | FIRST AREA MAP INFOR- MATION BLOCK | SECOND AREA MAP INFOR- MATION BLOCK | N-TH AREA MAP INFOR- MATION BLOCK |

END

EP 1 555 511 A1

EP 1 555 511 A1

## FIG. 7

STEP 1 : INNER CIRCUMFERENTIAL MAP IS RECEIVED

TRANSMITTING DATA

20

| ROUTE INFOR-MATION BLOCK | FIRST AREA MAP INFOR-MATION BLOCK |

21    72

50m-SCALE MAP DISPLAY ~1400

B POND

X SHOP

50m-SCALE MAP

GUIDING IS PERFORMED USING A MAP OF MINIMUM SCALE

STEP 2 : A MIDDLE CIRCUMFERENTIAL MAP IS RECEIVED

TRANSMITTING DATA

20

| ROUTE INFOR-MATION BLOCK | FIRST AREA MAP INFOR-MATION BLOCK | SECOND AREA MAP INFOR-MATION BLOCK |

21    72    73

200m-SCALE MAP DISPLAY ~1410

B POND    A PARK

X SHOP

Y SHOP    Z SHOP

200m-SCALE MAP

MAPS OF LIMITED SCALES (50m TO 200m) CAN BE SELECTIVELY DISPLAYED

STEP 3 : AN OUTER CIRCUMFERENTIAL MAP IS RECEIVED

TRANSMITTING DATA

20

| ROUTE DATA BLOCK | ------- | N-TH AREA MAP INFOR-MATION BLOCK |

21    75

10km-SCALE MAP DISPLAY ~1420

10km-SCALE MAP

MAPS OF ANY SCALES (50m TO 10km) CAN BE SELECTIVELY DISPLAYED

28

# FIG. 8

**120 ROUTE SEARCH AND GUIDANCE INFORMATION GENERATING SECTION**

**210 ON-VEHICLE TERMINAL**

1121 — STARTING PLACE AND DESTINATION INPUT SECTION

1122 — ROUTE SEARCH SECTION

1123 — MAP SEARCH AREA SETTING SECTION

1124 — MAP ELEMENT RELATING DATA EXTRACTING SECTION

1125 — DATA AMOUNT TARGET VALUE CALCULATING SECTION

1126 — DATA AMOUNT REDUCTION RATE CALCULATING SECTION

1127 — DATA AMOUNT REDUCTION METHOD SELECTING SECTION

1128 — DATA AMOUNT REDUCTION EXECUTION SECTION

125 MAP CUTOUT SECTION

INPUT SECTION — 235

DISPLAY — 230

TERMINAL COMMUNI-CATION SECTION — 215

POSITION MEASURING SECTION — 240

300

MAP DATABASE — 145

# FIG. 9

MAP DATABASE TABLE      301

| ID | LAYER | CATEGORY | FIGURE TYPE | FIGURE DATA | NAME |
|------|------|------|------|------|------|
| 2001 | 200 | 10 | polyline | $\{(x1, y1), \cdots, (xn, yn)\}$ | "CHUO LINE" |
| 3002 | 300 | 20 | polygon | $\{(x1, y1), \cdots, (xn, yn)\}$ | "GREEN PARK" |
| 1003 | 100 | 20 | polyline | $\{(x1, y1), \cdots, (xn, yn)\}$ | "ROUTE 16" |
| 4004 | 400 | 10 | point | $(x1, y1)$ | "XX BANK" |
| ⋮ | ⋮ | ⋮ | ⋮ | ⋮ | ⋮ |

LAYER TABLE      302

| LAYER | CATEGORY TABLE NAME |
|------|------|
| 100 | ROAD |
| 200 | RAILWAY |
| 300 | FIELD |
| 400 | LANDMARK |
| ⋮ | ⋮ |

ROAD CATEGORY TABLE      303

| CATEGORY | CONTENT |
|------|------|
| 10 | EXPRESSWAY |
| 20 | NATIONAL ROAD |
| 30 | PREFECTURAL ROAD |
| 40 | REGULAR ROAD |
| ⋮ | ⋮ |

RAILWAY CATEGORY TABLE      304

| CATEGORY | CONTENT |
|------|------|
| 10 | JR |
| 20 | PRIVATE RAILWAY |
| 30 | SUBWAY |
| 40 | MONORAIL |
| ⋮ | ⋮ |

FIELD CATEGORY TABLE      305

| CATEGORY | CONTENT |
|------|------|
| 10 | WATERS |
| 20 | PARK |
| 30 | SEA |
| 40 | OTHERS |
| ⋮ | ⋮ |

LANDMARK CATEGORY TABLE      306

| CATEGORY | CONTENT |
|------|------|
| 10 | BANK |
| 20 | RESTAURANT |
| 30 | DEPARTMENT STORE |
| 40 | FAST FOOD |
| ⋮ | ⋮ |

# FIG. 10

| FIGURE TYPE | EXAMPLE OF FIGURE DATA | STORAGE FORM |
|---|---|---|
| point | ● (x, y) | (x, y) |
| polyline | ●(x1, y1) ●(x2, y2) (x3, y3)  (x4, y4) | {(x1, y1),(x2, y2),(x3, y3),(x4, y4)} |
| polygon | (x1, y1) (x4, y4) (x2, y2) (x3, y3) | {(x1, y1),(x2, y2),(x3, y3),(x4, y4)} |

401

# FIG. 11

S200 INPUT OF STARTING PLACE AND DESTINATION

D213 COMMUNI-CATION RATE

D214 TRANSMITTING COMPLETION TARGET TIME

D210 STARTING PLACE AND DESTINATION

S203 DATA AMOUNT TARGET VALUE CALCULATING PROCESSING

S201 ROUTE SEARCH AND MAP SEARCH AREA SETTING PROCESSING

D215 DATA AMOUNT TARGET VALUE

D216 MAP SEARCH AREA DATA AMOUNT

145 MAP DATABASE

S204 DATA AMOUNT REDUCTION RATE CALCULATION PROCESSING

D217 DATA AMOUNT REDUCTION RATE

D218 REDUCTION RATE TABLE

S202 MAP ELEMENT AND ROAD RELATING PROCESSING

S205 DATA AMOUNT REDUCTION METHOD SELECTING PROCESSING

D220 EXECUTION COMMAND DATA

D211 MAP DATA AND ROUTE DATA RELATING

D206 DATA AMOUNT REDUCTION PROCESSING

D219 MAP DATA FOR TRANSMITTING

# FIG. 12

ROUTE SEARCH AND MAP SEARCH AREA SETTING

511 STARTING PLACE
512 DESTINATION
513 ROUTE
514 ROUTE AREA
515 MAP SEARCH AREA
510 MAP DATA STORED IN MAP DATABASE

## FIG. 13

RELATING LANDMAK FIGURES AND ROADS  ⌒301  ⌒601

| ID | LAYER | CATEGORY | FIGURE TYPE | FIGURE DATA | NAME | ADJACENT ROAD |
|---|---|---|---|---|---|---|
| 4003 | 400 | 20 | point | (x1, y1) | " " | {1002} |
| 4004 | 400 | 10 | point | (x1, y1) | "XX BANK" | {1003, 1006} |
| ⋮ | ⋮ | ⋮ | ⋮ | ⋮ | ⋮ | ⋮ |

LANDMARK 4003

ROAD ID 1002

ROAD ID 1004

ROAD ID 1003

ROAD ID 1001

4004 LANDMARK

ROAD ID 1005

ROAD ID 1006

ADJACENT ROAD IDS ARE FOUND AND RELATED IN UNITS OF FIGURES

———— : ROAD

○ : INTERSECTION

☐ : LANDMARK

# FIG. 14

RELATING BACKGROUND FIGURES AND ROADS  301  701

| ID | LAYER | CATEGORY | FIGURE TYPE | FIGURE DATA | NAME | ADJACENT ROAD |
|------|------|------|------|------|------|------|
| 2001 | 200 | 10 | polyline | {(x1, y1), ...} | "CHUO LINE" | {1002} |
| 3002 | 300 | 20 | polyline | {(x1, y1), ...} | "GREEN PARK" | {1003, 1006} |
| ⋮ | ⋮ | ⋮ | ⋮ | ⋮ | ⋮ | ⋮ |

ROAD ID
1002

ROAD ID
1004

ID : 2001

ROAD ID
1003

ROAD ID
1001

ROAD ID
1005

ID : 3002

ROAD ID
1006

ADJACENT OR INTERSECTING ROAD IDS ARE FOUND
AND RELATED IN UNITS OF FIGURES

# FIG. 15

REDUCTION RATE TABLE          803

| DATA REDUCTION METHOD NAME | PARAMETER SET | REDUCTION RATE (%) |
|---|---|---|
| ROAD/BACKGROUND/LANDMARK FIGURE SELECTING 1 | a | 80 |
| ROAD/BACKGROUND/LANDMARK FIGURE SELECTING 2 | b | 60 |
| ROAD/BACKGROUND/LANDMARK FIGURE SELECTING 3 | c | 40 |
| FIRST POLYLINE FIGURE LINEARIZING PROCESSING | FIXED | 5 |
| POLYLINE FIGURE INTEGRATING PROCESSING | FIXED | 15 |
| ⋮ | ⋮ | ⋮ |

804

PARAMETER TYPE OF ROAD FIGURE SELECTING PROCESSING

  a : ONLY ROUTES AND ROUTE MINOR ROADS INTERSECTING WITH THE ROUTES ARE SELECTED

  b : ONLY ROUTES, MAIN ROADS, AND ROUTE MINOR ROADS ARE SELECTED

  c : ROUTES, MAIN ROADS, AND ROUTE MINORS, AND STRAIGHT CONNECTING ROADS ARE SELECTED

# FIG. 16

DATA AMOUNT REDUCTION PROCESSING

D220
EXECUTION COMMAND DATA

D218
REDUCTION RATE TABLE

D211
MAP DATA AND ROUTE DATA RELATING

1128

DATA AMOUNT REDUCTION EXECUTION SECTION

911
ROAD FIGURE SELECTING SECTION

912
BACKGROUND FIGURE SELECTING SECTION

913
LANDMARK FIGURE SELECTING SECTION

921
FIRST POLYLINE FIGURE LINEARIZING SECTION

922
SECOND POLYLINE FIGURE LINEARIZING SECTION

923
POLYLINE FIGURE UNIFYING SECTION

924
POLYGONAL FIGURE SIMPLIFYING SECTION

931
FIRST MAP DATA DIVIDE PROVISION SECTION

932
SECOND MAP DATA DIVIDE PROVISION SECTION

950
SELECTION CONTROL ADJUST-MENT PROCESSING SECTION

D219
MAP DATA FOR TRANSMITTING

## FIG. 17

START

↓

ASSIGN PRIORITY p1 TO ROUTE ROAD ⌒ S1001

↓

ASSIGN PRIORITY p2 TO MAIN ROAD ⌒ S1002

↓

ASSIGN PRIORITY p3 TO ROUTE MINOR ROAD ⌒ S1003

↓

ASSIGN PRIORITY p4 TO ROAD WITH NAME ⌒ S1004

↓

ASSIGN PRIORITY p5 TO STRAIGHT CONNECTING ROAD OF ROUTE MINOR ROAD ⌒ S1005

↓

END

## FIG. 18

ROAD DATA WITH PRIORITY                              ⌒301      1010

| ID | LAYER | CATEGORY | FIGURE TYPE | FIGURE DATA | NAME | PRI-ORITY |
|----|-------|----------|-------------|-------------|------|-----------|
| 1001 | 100 | 50 | polyline | {(x1, y1), ···, (xn, yn)} | | p1 |
| 1002 | 100 | 20 | polyline | {(x1, y1), ···, (xn, yn)} | {(name, "ROUTE 20")} | p2 |
| 1003 | 100 | 20 | polyline | {(x1, y1), ···, (xn, yn)} | {(name, "ROUTE 16")} | p3 |
| 1004 | 100 | 40 | polyline | {(x1, y1), ···, (xn, yn)} | {(name, "FUCHU ROAD")} | p4 |
| ⋮ | ⋮ | ⋮ | ⋮ | ⋮ | ⋮ | ⋮ |

# FIG. 19A

REGION SEARCH AREA — 515

# FIG. 19B

ROUTE

# FIG. 19C

ROUTE AND MINOR

# FIG. 19D

ROUTE AND MAIN ROAD AND MINOR

# FIG. 19E

ROUTE AND MAIN ROAD AND MINOR AND MINOR STRAIGHT CONNECTING ROAD

## FIG. 20

```
                    START

                                              S1301
     READOUT IDENTIFICATION NUMBER AND
     PRIORITY OF SELECTED ROAD FIGURE

                                              S1302
     IN ADJACENT ROAD ID FIELD, EXTRACT
     BACKGROUND FIGURE IN WHICH ID OF
     SELECTED ROAD IS DESCRIBED

                                              S1303
     IN PRIORITY FIELD OF EXTRACTED BACK-
     GROUND FIGURE, ENTER ROAD PRIORITY
     DESCRIBED IN ADJACENT ROAD ID FIELD

                     END
```

## FIG. 21

```
                    START

                                              S1401
     READOUT IDENTIFICATION NUMBER AND
     PRIORITY OF SELECTED ROAD FIGURE

                                              S1402
     IN ADJACENT ROAD ID FIELD, EXTRACT
     LANDMARK IN WHICH ID OF SELECTED
     ROAD IS DESCRIBED

                                              S1403
     IN PRIORITY FIELD OF EXTRACTED
     LANDMARK, ENTER ROAD PRIORITY
     DESCRIBED IN ADJACENT ROAD ID FIELD

                     END
```

FIG. 22A

FIG. 22B

FIG. 22C

EP 1 555 511 A1

FIG. 23A  FIG. 23B  FIG. 23C  FIG. 23D  FIG. 23E

# FIG. 24

```
        ┌─────────────────────────┐
        (         START           )
        └─────────────────────────┘
                    │
                    ▼                        ⌒ S1701
┌──────────────────────────────────────────┐
│ CALCULATE THE DISTANCE BETWEEN TWO         │
│ POLYLINE FIGURES                           │
└──────────────────────────────────────────┘
                    │
                    ▼                        ⌒ S1702
┌──────────────────────────────────────────┐
│ UNIFY ADJACENT POLYLINE FIGURES            │
└──────────────────────────────────────────┘
                    │
                    ▼                        ⌒ S1703
┌──────────────────────────────────────────┐
│ REPLACE TWO ADJACENT POLYLINE              │
│ FIGURES BY A POLYLINE FIGURE               │
└──────────────────────────────────────────┘
                    │
                    ▼
        (          END            )
```

FIG. 25A

FIG. 25B

## FIG. 26A

POLYGON S

## FIG. 26B

POLYGON S

## FIG. 27A

STARTING POINT
511

G

512
ENDING POINT

513 ROUTE

S

## FIG. 27B

STARTING POINT
511

2001

G

512
ENDING POINT

513 ROUTE

S

# FIG. 28

STARTING POINT
511

2102

2101

2103

2104

G

512
ENDING POINT

513 ROUTE

S

## FIG. 29A

ROUTE LINK TRAIN DATA

| ROUTE ID | |
|---|---|
| TRANSMISSION DATA SIZE | |
| MESH ID (A4) | ⎫ |
| ROUTE LINK TRAIN (LL001) | ⎬ MESH A4 |
| ROUTE LINK TRAIN (LL002) | |
| ⋮ | ⎭ |
| MESH ID (B4) | ⎫ |
| ROUTE LINK TRAIN | ⎬ MESH B4 |
| ⋮ | ⎭ |
| MESH ID (B3) | ⎫ |
| ROUTE LINK TRAIN | ⎬ MESH B3 |
| ⋮ | ⎭ |
| MESH ID (C3) | ⎫ |
| ROUTE LINK TRAIN | ⎬ MESH C3 |
| ⋮ | ⎭ |
| MESH ID (C2) | ⎫ |
| ROUTE LINK TRAIN | ⎬ MESH C2 |
| ⋮ | ⎭ |
| MESH ID (C1) | ⎫ |
| ROUTE LINK TRAIN | ⎬ MESH C1 |
| ⋮ | |
| ROUTE LINK TRAIN (LL021) | ⎭ |

## FIG. 29B

MAP DATA

| ROUTE ID | |
|---|---|
| TRANSMISSION DATA SIZE | |
| MESH ID (A4) | ⎫ |
| ROAD DATA | ⎬ MESH A4 |
| BACKGROUND DATA | |
| NAME DATA | ⎭ |
| | ⊢ MESH B4 |
| | ⊢ MESH A3 |
| | ⊢ MESH B3 |
| | ⊢ MESH C4 |
| | ⊢ MESH C3 |
| | ⊢ MESH B2 |
| | ⊢ MESH C2 |
| | ⊢ MESH B1 |
| | ⊢ MESH C1 |

# FIG. 30

MAP MANAGEMENT TABLE     1014

| ROUTE ID | 1 |
|---|---|

| ROUTE LINK TRAIN ID | MESH ID |
|---|---|
| LL001 | A4, A3 |
| LL002 | A4, A3 |
|  | ⋮ |
| LL018 | B3, B2, C3, C2 |
| LL019 | B2, B1, C2, C1 |
|  | ⋮ |

| ROUTE ID | 2 |
|---|---|

| ROUTE LINK TRAIN ID | MESH ID |
|---|---|
| LL001 | A4, A3 |
| LL002 | A4, A3 |
|  | ⋮ |
| LL063 | C2 |
| LL064 | C2 |
|  | ⋮ |

TABLE FOR MESHES

⋮

MESH DATA TABLE

| MESH ID | ROUTE ID | ROUTE LINK TRAIN ID | MESH DATA NAME |
|---|---|---|---|
| A4 | 1, 2 | LL001 | A4_20030123 |
| B4 | 1, 2 | LL001 | B4_20030123 |
|  | ⋮ |  |  |
| B2 | 1, 2 | LL018, LL019 | B2_20030123 |
| C2 | 1 | LL018, LL019 | C2_20030205 |
| C2 | 2 | LL018, LL063, LL064 | C2_20030205 |
|  | ⋮ |  |  |

# FIG. 31A

ROUTE LINK TRAIN DATA

| ROUTE ID |
|---|
| TRANSMISSION DATA SIZE |
| MESH ID (A4) |
| ROUTE LINK TRAIN |
| ⋮ |
| MESH ID (B4) |
| ROUTE LINK TRAIN |
| ⋮ |
| MESH ID (B3) |
| ROUTE LINK TRAIN |
| ⋮ |
| MESH ID (C3) |
| ROUTE LINK TRAIN |
| ⋮ |
| MESH ID (C2) |
| ROUTE LINK TRAIN |
| ⋮ |
| MESH ID (D2) |
| ROUTE LINK TRAIN |
| ⋮ |

MESH A4
MESH B4
MESH B3
MESH C3
MESH C2
MESH D2

# FIG. 31B

MAP DATA

| ROUTE ID |
|---|
| TRANSMISSION DATA SIZE |
| MESH ID (C2) |
| ROUTE LINK TRAIN |
| ROUTE LINK TRAIN |
| ⋮ |
| BACKGROUND DATA |
| ROAD DATA |
| NAME DATA |
| ⋮ |

MESH C2
MESH D2

# FIG. 32

```
           ┌─────────────────────────┐
           │          START          │
           └─────────────────────────┘
                        │
                        │         ⟋ S2010
           ◁─────────────────────────▷
            INITIALIZE ROUTE VICINITY MAP
           ◁─────────────────────────▷
                        │ ◄──────────────────┐
                        │         ⟋ S2020     │
           ┌─────────────────────────┐        │
           │   DECIDE DISPLAY RANGE   │        │
           └─────────────────────────┘        │
                        │         ⟋ S2030     │
           ┌─────────────────────────┐        │
           │ CUT OUT TOPOGRAPHIC DATA │        │
           └─────────────────────────┘        │
                        │         ⟋ S2040     │
           ┌─────────────────────────┐        │
           │      ADD ROAD DATA       │        │
           └─────────────────────────┘        │
                        │         ⟋ S2050     │
           ┌─────────────────────────┐        │
           │  ADD MAP MATCHING DATA   │        │
           └─────────────────────────┘        │
                        │         ⟋ S2060     │
           ┌─────────────────────────┐        │
           │     ADD FACILITY DATA    │        │
           └─────────────────────────┘        │
                        │         ⟋ S2070     │
           ┌─────────────────────────┐        │
           │ UPDATE ROUTE VICINITY MAP│        │
           └─────────────────────────┘        │
                        │         ⟋ S2080     │
                     ◇─────────◇   No         │
                    │  MAP CREATION ├──────────┘
                    │  COMPLETED ?  │
                     ◇─────────◇
                        │ Yes
           ┌─────────────────────────┐
           │           END           │
           └─────────────────────────┘
```

# FIG. 33

# FIG. 34

start 2201

2204

2302

$\blacktriangleright$ △△△ROAD 145km

$\uparrow$ ×××ROAD 115km

$\blacktriangleright$ ○○○ROAD 65km

2301

goal

2303  2304

## INTERNATIONAL SEARCH REPORT

| | |
|---|---|
| International application No. | |
| | PCT/JP03/13483 |

**A. CLASSIFICATION OF SUBJECT MATTER**
Int.Cl$^7$ G01C21/00, G08G1/137

According to International Patent Classification (IPC) or to both national classification and IPC

**B. FIELDS SEARCHED**

Minimum documentation searched (classification system followed by classification symbols)
Int.Cl$^7$ G01C21/00, G08G1/137, G09B23/00-29/14

Documentation searched other than minimum documentation to the extent that such documents are included in the fields searched
Jitsuyo Shinan Koho          1922-1996   Toroku Jitsuyo Shinan Koho   1994-2003
Kokai Jitsuyo Shinan Koho   1971-2003   Jitsuyo Shinan Toroku Koho   1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2001-141490 A  (Equos Research Co., Ltd.),<br>25 May, 2001 (25.05.01),<br>Full text; Fig. 5<br>(Family: none) | 1,2,7,8<br>3-6,9,10,12<br>11 |
| X<br>Y<br>A | JP 2002-213981 A  (Equos Research Co., Ltd., Aisin<br>AW Co., Ltd.),<br>31 July, 2002 (31.07.02),<br>Full text; Fig. 7<br>(Family: none) | 1,2,7,8<br>3-6<br>11 |
| X<br>Y<br>A | US 6351708 B1  (NISSAN MOTOR CO., LTD.),<br>26 February, 2002 (26.02.02),<br>Column 6, line 59 to column 8, line 20; Fig. 6<br>& JP 2000-207689 A | 1,2<br>3,4<br>11 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 November, 2003 (21.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## EP 1 555 511 A1

| | | |
|---|---|---|
| **INTERNATIONAL SEARCH REPORT** | International application No. | |
| | PCT/JP03/13483 | |

**C (Continuation).  DOCUMENTS CONSIDERED TO BE RELEVANT**

| Category* | Citation of document, with indication, where appropriate, of the relevant passages | Relevant to claim No. |
|---|---|---|
| Y<br>A | US 6320518 B2  (MITSUBISHI DENKI KABUSHIKI KAISHA),<br>20 November, 2001 (20.11.01),<br>Column 8, lines 33 to 52; column 13, lines 19 to<br>56; Figs. 2, 15<br>& JP 2001-241965 A | 3-6,9,10,12<br>11 |
| A | JP 9-139685 A  (Sony Corp.),<br>27 May, 1997 (27.05.97),<br>Column 4, lines 5 to 15; Fig. 2<br>(Family: none) | 1-12 |
| A | JP 2001-59725 A  (NEC Corp.),<br>06 March, 2001 (06.03.01),<br>Full text; Fig. 5<br>(Family: none) | 1-12 |

Form PCT/ISA/210 (continuation of second sheet) (July 1998)

54